# EUROPEAN PATENT APPLICATION

(11) **EP 4 472 044 A1**
(43) Date of publication of application: **04.12.2024**
(21) Application number: 24170519.3
(22) Date of filing: 16.04.2024
(51) Int. Cl.: H02K 33/16, H02K 1/34

(54) **VIBRATORY LINEAR ACTUATOR AND CUTTER**

(30) Priority: 29.05.2023 JP 2023088017
(71) Applicant: Panasonic Intellectual Property Management Co., Ltd., Kadoma-shi, Osaka 571-0057 (JP)
(72) Inventor: Hirano, Yasuyuki, Kadoma-shi, Osaka, 571-0057 (JP); Matsumoto, Naohiro, Kadoma-shi, Osaka, 571-0057 (JP); Moriguchi, Masashi, Kadoma-shi, Osaka, 571-0057 (JP); Kobayashi, Noboru, Kadoma-shi, Osaka, 571-0057 (JP)
(74) Representative: Grünecker Patent- und Rechtsanwälte PartG mbB

(57) **Abstract**

The present disclosure provides a vibratory linear actuator and a cutter capable of suppressing vibration while enabling a size reduction. A vibratory linear actuator according to the present disclosure includes an output movable body and vibration-absorbing movable body reciprocating at opposite phases. The vibratory linear actuator also includes a coupling member configured to couple the output movable body and vibration-absorbing movable body to each other. Vibration-absorbing movable body further includes absorbing-side weight configured to adjust to move the position of the center of gravity of vibration-absorbing movable body closer to the position of the center of gravity of the output movable body. The coupling member includes: an output movable body holder configured to hold the output movable body; vibration-absorbing movable body holder configured to hold vibration-absorbing movable body; and a coupler configured to couple the output movable body holder and vibration-absorbing movable body holder to each other. Absorbing-side weight is provided with a fastening portion fastened to a fastening portion counterpart formed in the vibration-absorbing movable body holder.

## Description

### TECHNICAL FIELD

The present disclosure relates to a vibratory linear actuator and a cutter.

### BACKGROUND ART

As a conventional vibratory linear actuator, there is a known vibratory linear actuator including an output movable body caused to reciprocate by a magnetic field that changes cyclically, and a vibration-absorbing movable body for absorbing vibration by reciprocating at the phase opposite to that of the reciprocation of the output movable body, as disclosed in PTL 1.

According to PTL 1, by providing a weight to the vibration-absorbing movable body, the position of the center of gravity of the vibration-absorbing movable body, for absorbing vibration, is brought closer to the position of the center of gravity of the output movable body having a movable blade attached thereto. In this manner, the vibration generated by the reciprocating output movable body can be suppressed more reliably.

### Citation List

### Patent Literature

PTL 1: Japanese Patent No. 6793366

### SUMMARY OF THE INVENTION

### Technical problem

For such a vibratory linear actuator that uses a weight to absorb vibration, it is preferable to be smaller in size.

An object of the present disclosure is hence to obtain a vibratory linear actuator and a cutter capable of suppressing vibration while enabling a size reduction.

### Solution to problem

A vibratory linear actuator according to one aspect of the present disclosure includes: an output movable body capable of be reciprocated in a first direction by a magnetic field that changes cyclically; a vibration-absorbing movable body configured to absorb vibration generated by the reciprocation of the output movable body in the first direction, by being reciprocated in the first direction at a phase opposite to a phase of the reciprocation of the output movable body; and a coupling member configured to couple the output movable body and the vibration-absorbing movable body to each other, wherein the output movable body includes an output shaft which extends in a second direction intersecting with the first direction and is capable of being joined to an attachment, the vibration-absorbing movable body includes an absorbing-side weight for adjusting to move a position of a center of gravity of the vibration-absorbing movable body closer to a position of a center of gravity of the output movable body, the coupling member includes: an output movable body holder that holds the output movable body; a vibration-absorbing movable body holder that holds the vibration-absorbing movable body; and a coupler that couple the output movable body holder and the vibration-absorbing movable body holder to each other, and the absorbing-side weight has a fastening portion that is to be fastened with a fastening portion counterpart formed in the vibration-absorbing movable body holder.

A cutter according to an aspect of the present disclosure includes the vibratory linear actuator, a movable blade that forms a part of the attachment, and a fixed blade with which the movable blade comes into sliding contact.

### Advantageous effect of invention

According to the present disclosure, it is possible to obtain a vibratory linear actuator and a cutter capable of suppressing vibration while enabling a size reduction.

### BRIEF DESCRIPTION OF THE DRAWINGS

Fig. 1 is a perspective view illustrating an exemplary hair clipper according to an exemplary embodiment.
Fig. 2 is an exploded perspective view illustrating the exemplary hair clipper according to the exemplary embodiment.
Fig. 3 is a perspective view of the exemplary vibratory linear actuator according to the exemplary embodiment, as viewed from one direction.
Fig. 4 is a perspective view of the exemplary vibratory linear actuator according to the exemplary embodiment, as viewed from another direction.
Fig. 5 is a front view illustrating the exemplary vibratory linear actuator according to the exemplary embodiment.
Fig. 6 is an exploded perspective view illustrating the exemplary vibratory linear actuator according to the exemplary embodiment.
Fig. 7 is an exploded front view illustrating the exemplary vibratory linear actuator according to the exemplary embodiment in a state of dividing into a magnetic block which has been fastened to a positioning member and an electromagnetic core block.
Fig. 8 is a perspective view illustrating the exemplary vibratory linear actuator according to the exemplary embodiment in a state where the positioning member is removed therefrom.
Fig. 9 is a front view illustrating the exemplary vibratory linear actuator according to the exemplary embodiment in the state where the positioning member is removed therefrom.
Fig. 10 is a perspective view illustrating the exemplary electromagnetic core block according to the exemplary embodiment.
Fig. 11 is an exploded perspective view illustrating the exemplary electromagnetic core block according to the exemplary embodiment.
Fig. 12 is an exploded perspective view illustrating the exemplary output movable body and an exemplary coupling member according to the exemplary embodiment.
Fig. 13 is a perspective view illustrating a state where the exemplary output movable body according to the exemplary embodiment is held in an exemplary output movable body holder provided to the coupling member.
Fig. 14 is a front view illustrating a state where the exemplary output movable body according to the exemplary embodiment is held in the exemplary output movable body holder provided to the coupling member.
Fig. 15 is a perspective view illustrating a state where the exemplary output movable body connected by an exemplary movable blade block according to the exemplary embodiment is held in the exemplary output movable body holder provided to the coupling member.
Fig. 16 is a front view illustrating the state where the exemplary output movable body connected by the exemplary movable blade block according to the exemplary embodiment is held in the exemplary output movable body holder provided to the coupling member.
Fig. 17 is an exploded perspective view illustrating an exemplary vibration-absorbing movable body and the exemplary coupling member according to the exemplary embodiment.
Fig. 18 is a perspective view illustrating a state where the exemplary vibration-absorbing movable body according to the exemplary embodiment is held in an exemplary vibration-absorbing movable body holder provided to the coupling member.
Fig. 19 is a front view illustrating the state where the exemplary vibration-absorbing movable body according to the exemplary embodiment is held in the exemplary vibration-absorbing movable body holder provided to the coupling member.
Fig. 20 is a perspective view illustrating an exemplary absorbing-side weight according to the exemplary embodiment.
Fig. 21 is a plan view illustrating the exemplary absorbing-side weight according to the exemplary embodiment.
Fig. 22 is a front view illustrating the exemplary absorbing-side weight according to the exemplary embodiment.
Fig. 23 is a side view illustrating the exemplary absorbing-side weight according to the exemplary embodiment.
Fig. 24 is a diagram schematically illustrating an exemplary fastening structure for fastening the vibratory linear actuator according to the exemplary embodiment to a fastening portion counterpart.
Fig. 25 is an enlarged view illustrating a portion where the vibratory linear actuator in Fig. 24 is fastened to the fastening portion counterpart.

### DESCRIPTION OF EMBODIMENT

An exemplary embodiment will be described below in detail with reference to some drawings. Note that detailed descriptions more than necessary are sometimes omitted. For example, detailed descriptions of already well-known matters and redundant descriptions of substantially the same configurations are sometimes omitted.

Note that the accompanying drawings and the descriptions hereunder are provided for those skilled in the art to fully understand the present disclosure, and are not intended to limit the subject matter described in the claims in any way.

In the following exemplary embodiment, a hair clipper for clipping the hair (that is, an example of body hair) of a user or the like is used as an example of the cutter.

In addition, in the following exemplary embodiment, a direction in which the output movable body and the vibration-absorbing movable body reciprocate will be described as a Y direction, a direction in which the output shaft extends will be described as a Z direction, and a direction intersecting (more specifically, perpendicularly intersecting) with the Y direction and the Z direction will be described as an X direction. In the description herein, the Y direction will be referred to as a width direction or a first direction. In the description herein, the Z direction will be referred to as a vertical direction, a second direction, or an axial direction of the output shaft. In the description herein, the X direction will be referred to as a depth direction or a third direction.

Furthermore, the vibratory linear actuator will be described below by defining the vertical direction as that of the vibratory linear actuator in a state where the tip of the output shaft points upwards.

In the following exemplary embodiment, the side where a link mechanism holder member is located is defined as a front side (that is, the front side in the X direction) of the vibratory linear actuator for convenience.

### (Exemplary embodiment)

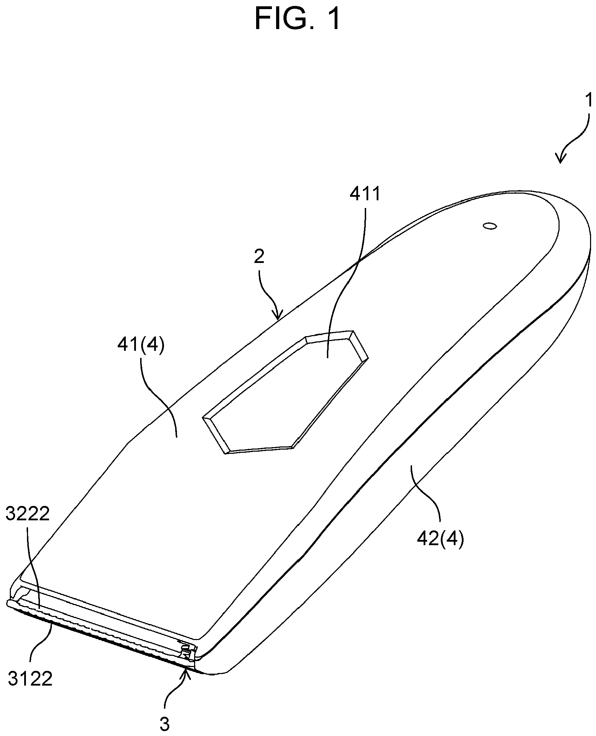

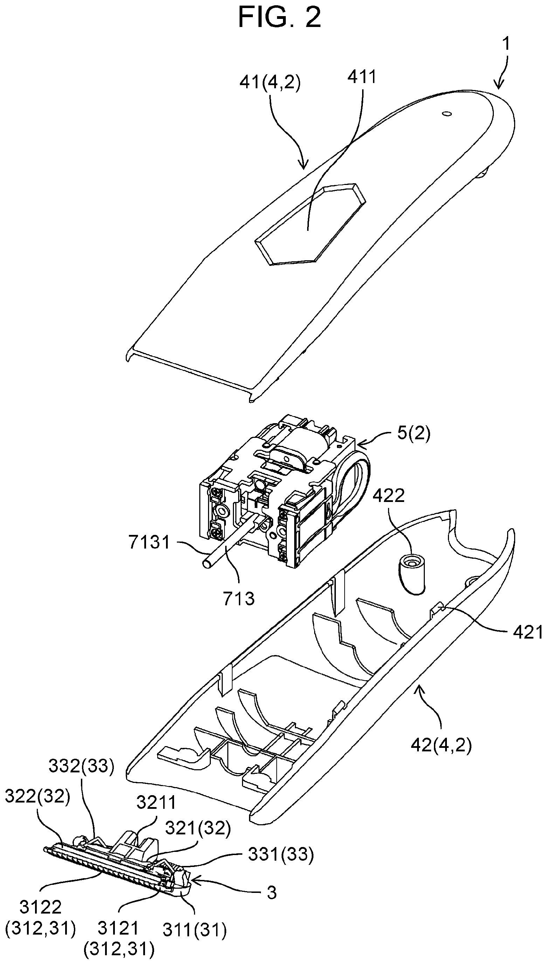

Fig. 1 is a perspective view illustrating exemplary hair clipper 1 according to an exemplary embodiment. Fig. 2 is a side view illustrating exemplary hair clipper 1 according to the exemplary embodiment. As illustrated in Figs. 1 and 2, hair clipper 1 according to the present exemplary embodiment includes body 2 and blade block 3 which is detachably attached to body 2. In the present exemplary embodiment, body 2 has an elongated shape, and body 2 has grip 2a for allowing the user to hold with a hand.

Hair clipper 1 is, for example, a device for handling or styling up the hair of a user or the like by cutting the hair of the user or the like to a desired length. Blade block 3 includes fixed blades 3122 which is made of metal, and movable blades 3222 which is made of metal and caused to reciprocate in a manner sliding along (that is, in sliding contact with) fixed blades 3122 in the Y direction (that is, in the width direction or the first direction).

Blade block 3 is mounted on body 2. Movable blades 3222 is caused to reciprocate slidably in the Y direction (that is, the width direction or the first direction) with respect to fixed blades 3122, by using vibratory linear actuator 5 housed inside body 2 as a drive source, so that the hair is nipped between fixed blades 3122 and movable blades 3222 and cut thereby.

In the present exemplary embodiment, body 2 also includes housing 4 that forms the outer shell of hair clipper 1. Housing 4 may be made of a material such as a synthetic resin, and operation switch 411 is mounted on housing 4 in a manner exposed to the outside and enabled to be pushed inwards.

In the present exemplary embodiment, housing 4 is formed by joining a plurality of parts, and includes first housing part 41 having operation switch 411, and second housing part 42 joined to first housing part 41. Housing 4, formed by joining a plurality of parts, which include first housing part 41 and second housing part 42, has an internal cavity, and various electric components including vibratory linear actuator 5 are housed inside the cavity. These plurality of parts can be joined by using screws, or by fitting the parts to each other, for example. In the present exemplary embodiment, the plurality of parts are joined with hooks 421 and ribs 422 provided on second housing part 42, as an example.

The electric components housed inside the cavity formed in housing 4 may include a rechargeable battery for driving vibratory linear actuator 5, and a circuit board (that is, an example of a control unit) for controlling power supply to vibratory linear actuator 5, in response to a pressing operation of operation switch 411 exposed to the outside.

Blade block 3 has a function of cutting hair, and includes blades (that is, blades of hair clipper) including movable blades 3222 and fixed blades 3122 that are disposed in a manner facing each other.

In the present exemplary embodiment, blade block 3 includes, as illustrated in Fig. 2, fixed blade block 31 having fixed blades 3122, and movable blade block 32 having movable blades 3222 and capable of reciprocating in the Y direction (that is, the width direction or the first direction) with respect to fixed blade block 31. Movable blade block 32 reciprocates in the Y direction (that is, the width direction or the first direction) with respect to fixed blade block 31, thereby reciprocating and sliding movable blades 3222 in the Y direction (that is, the width direction or the first direction) with 6espectt to fixed blades 3122.

As illustrated in Fig. 2, fixed blade block 31 includes fixed base 311 that is made of resin, and fixed plate 312 that is made of metal and that is fixed to fixed base 311. Fixed plate 312 includes body 3121 fixed to fixed plate 311 and fixed blades 3122 provided at the tip of body 3121. Fixed blade block 31 is then mounted on body 2 by fixing fixed base 311 to body 2 in a state where having body 3121 of fixed plate 312 is fixed to fixed base 311. At this time, fixed blade block 31 is fastened to body 2 in such a manner at least tip-side ends of fixed blades 3122 stick out from the tip of body 2.

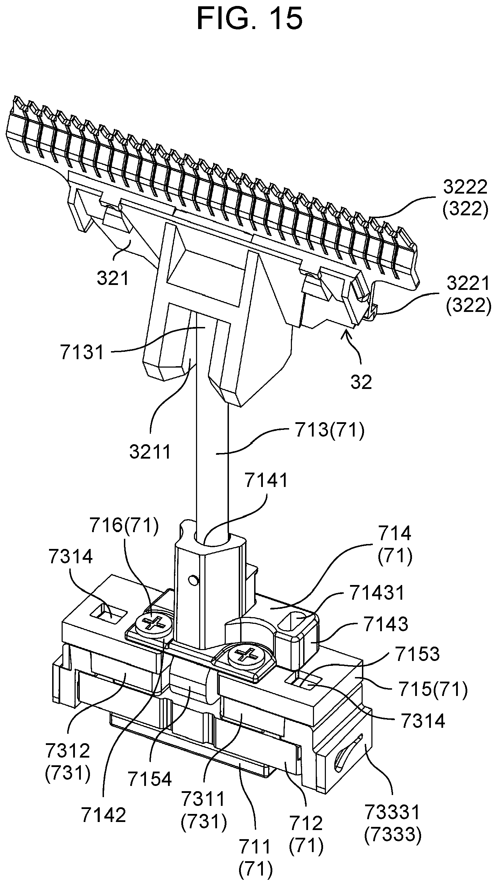

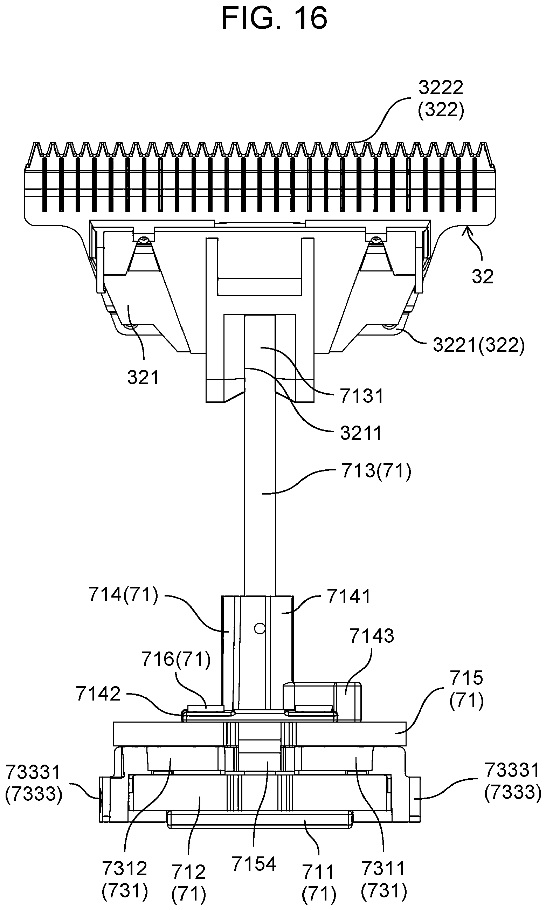

Fig. 15 is a perspective view illustrating a state where exemplary output movable body 71 connected by exemplary movable blade block 32 according to the exemplary embodiment is held in exemplary output movable body holder 731 provided to coupling member 73. Fig. 16 is a front view illustrating the state exemplary output movable body 71 connected by exemplary movable blade block 32 according to the exemplary embodiment, is held in exemplary output movable body holder 731 provided to coupling member 73. As illustrated in Figs. 2, 15, and 16, movable blade block 32 includes guide plate 321 that is made of resin, and movable plate 322 that is made of metal and is fastened to guide plate 321. Movable plate 322 includes body 3221 fastened to guide plate 321, and movable blades 3222 provided at the tip of body 3221.

In a state where blade block 3 is mounted on body 2, guide plate 321 is connected to output shaft 713 of vibratory linear actuator 5, which will be described later. In the present exemplary embodiment, as illustrated in Figs. 15 and 16, guide plate 321 is connected to output shaft 713, by mating end 7131 of output shaft 713 into mating recess 3211 provided to guide plate 321.

In the present exemplary embodiment, movable blades 3222 are configured to be brought into contact with fixed blades 3122 in a state where blade block 3 is mounted on body 2.

In this manner, when vibratory linear actuator 5 is driven to reciprocate output shaft 713 in the Y direction (that is, the width direction or the first direction), guide plate 321 and movable plate 322 fastened to guide plate 321, that is, movable blade block 32, are reciprocated in the Y direction (that is, the width direction or the first direction), in a manner linked with the movement of output shaft 713. By causing movable blade block 32 to reciprocate in the Y direction (that is, the width direction or the first direction), movable blades 3222 are slidably reciprocated in the Y direction (that is, the width direction or the first direction), with respect to fixed blades 3122 so that hair can be cut by movable blades 3222 and fixed blades 3122.

As described above, in the present exemplary embodiment, movable blade block 32 corresponds to an attachment enabled to be joined with output shaft 713.

In the present exemplary embodiment, blade block 3 includes push-up spring 33 that is made of metal, and that presses movable plate 322 toward fixed plate 312.

Push-up spring 33 is a member for pressing movable plate 322 toward fixed plate 312, to bring movable blades 3222 and the fixed blades 3122 into sliding contact with each other more reliably, and may be formed of, for example, a torsion spring. In the present exemplary embodiment, push-up spring 33 includes coil 331, and arm 332 that is connected to an end of coil 331 and that is fixed to movable plate 322, to press movable plate 322 toward fixed plate 312.

Next, a specific configuration of vibratory linear actuator 5 will be described.

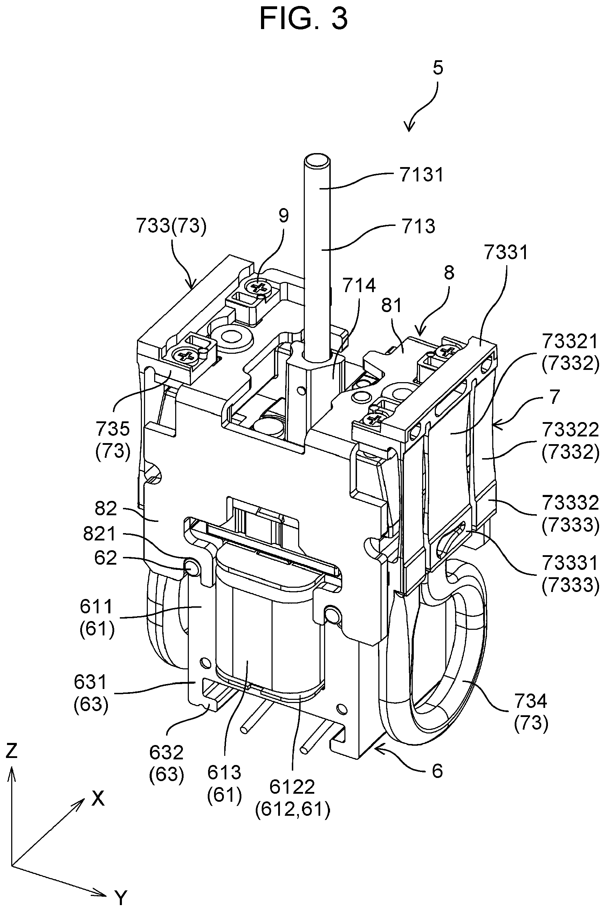

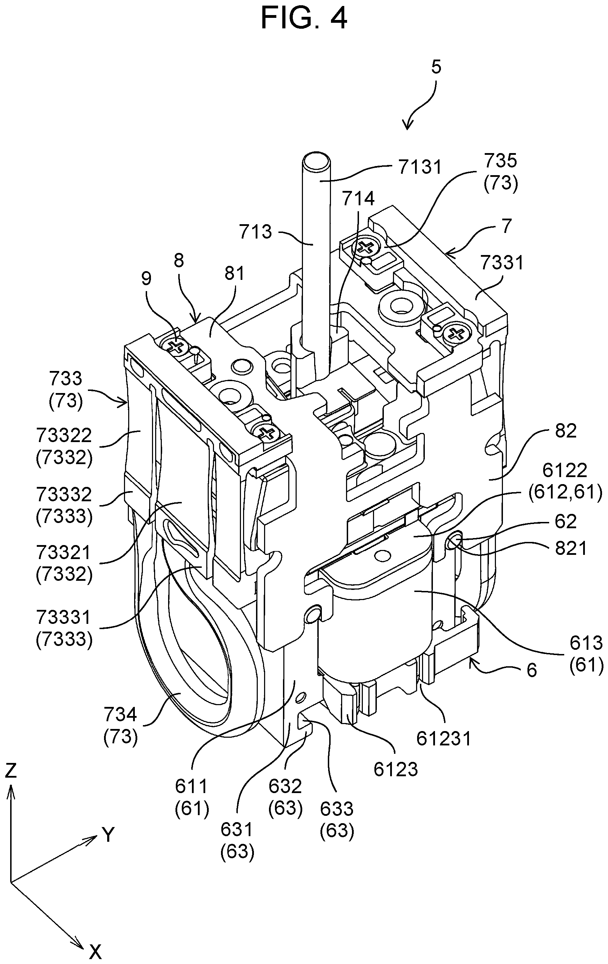

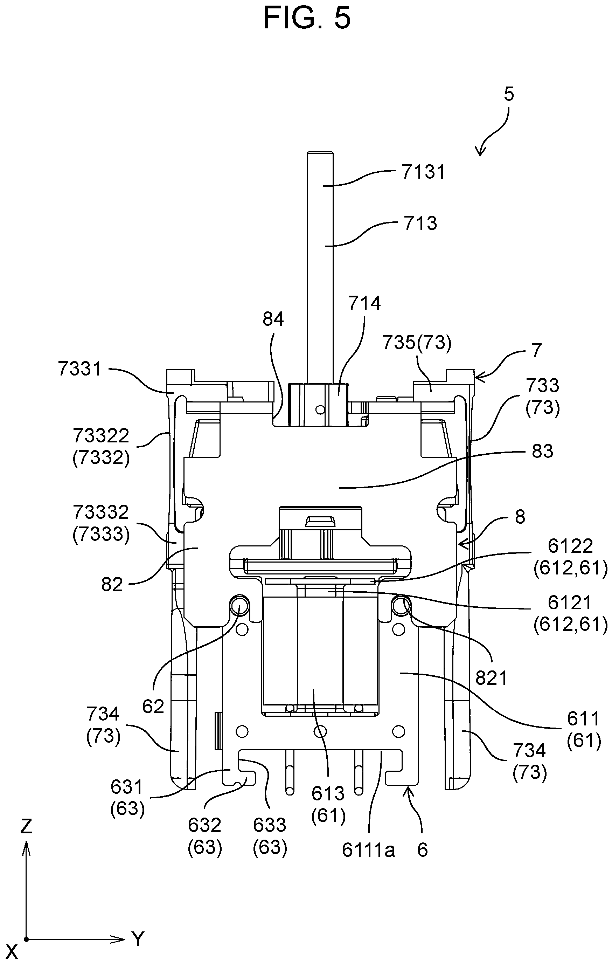

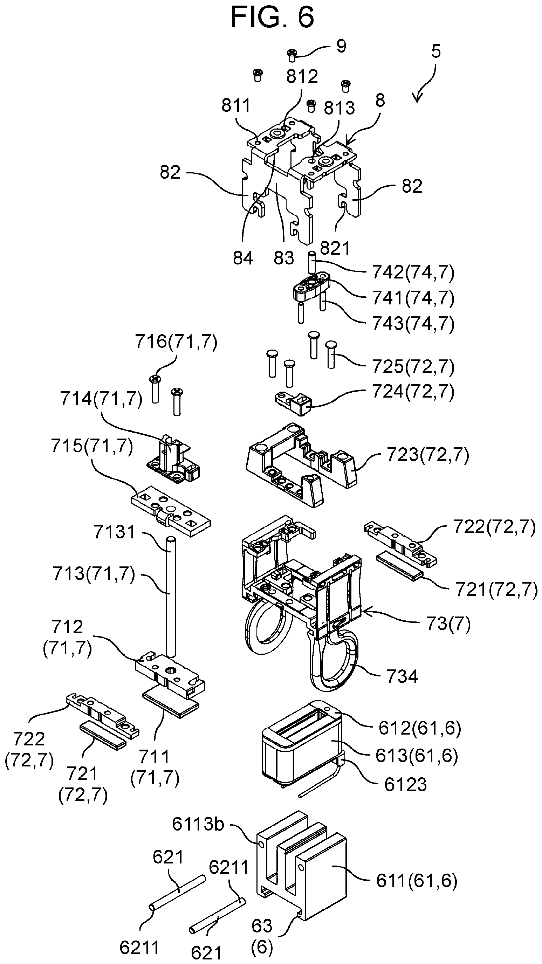

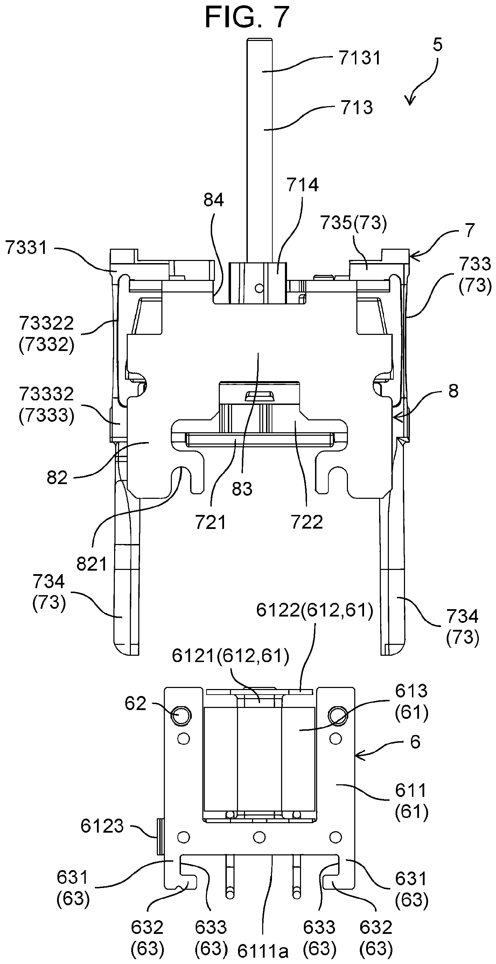

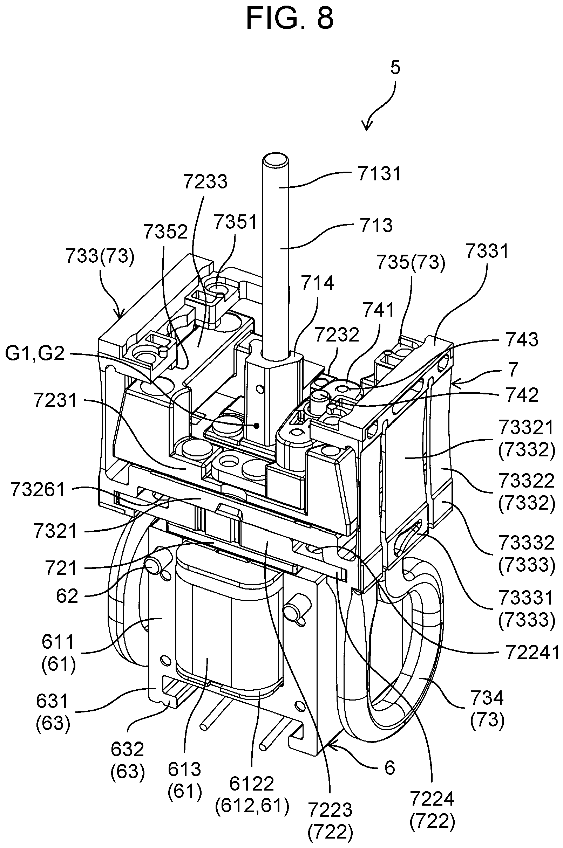

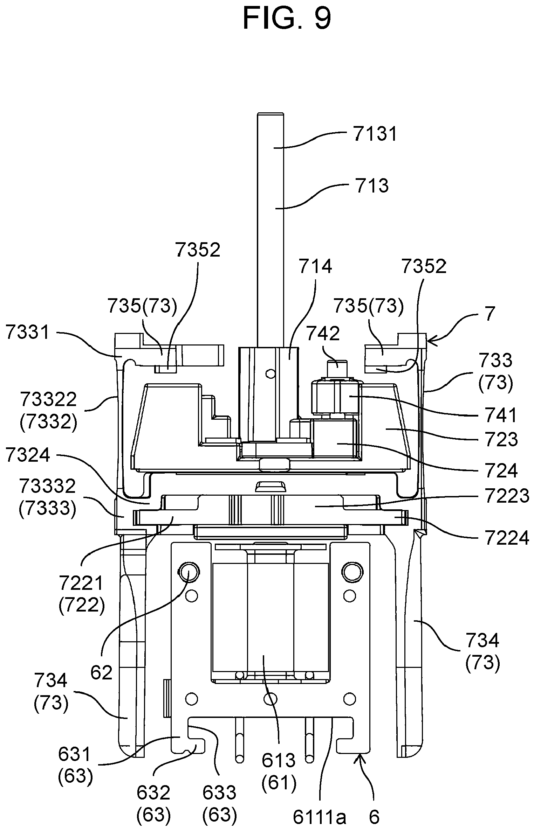

Fig. 3 is a perspective view of exemplary vibratory linear actuator 5 according to the exemplary embodiment, as viewed from one direction. Fig. 4 is a perspective view of exemplary vibratory linear actuator 5 according to the exemplary embodiment, as viewed from another direction. Fig. 5 is a front view illustrating exemplary vibratory linear actuator 5 according to the exemplary embodiment. Fig. 6 is an exploded perspective view illustrating exemplary vibratory linear actuator 5 according to the exemplary embodiment. Fig. 7 is an exploded front view illustrating exemplary vibratory linear actuator 5 according to the exemplary embodiment in a state of dividing into magnetic block 7 which has been fastened to positioning member 8 and electromagnetic core block 6. Fig. 8 is a perspective view illustrating exemplary vibratory linear actuator 5 according to the exemplary embodiment in a state where positioning member 8 is removed. Fig. 9 is a front view illustrating the example of vibratory linear actuator 5 according to the exemplary embodiment in the state where positioning member 8 is removed. As illustrated in Figs. 3 to 9, vibratory linear actuator 5 includes magnetic block 7 (that is, an example of a movable element) capable of reciprocating in the Y direction (that is, the width direction or the first direction), and electromagnetic core block 6 (that is, an example of a stator element) capable of driving magnetic block 7 to reciprocate in the Y direction (that is, the width direction or the first direction).

In the present exemplary embodiment, vibratory linear actuator 5 includes positioning member 8 (that is, an example of a frame member) capable of setting electromagnetic core block 6 and magnetic block 7 to the correct positions. Electromagnetic core block 6 and magnetic block 7 are set to correct positions by enabling electromagnetic core block 6 to hold down magnetic block 7 with positioning member 8 fastened thereto. In this way, magnetic block 7 is disposed above electromagnetic core block 6 in a state where a predetermined gap is formed between magnetic block 7 and electromagnetic core block 6, so that movable bodies (e.g., output movable body 71 and vibration-absorbing movable body 72) provided to magnetic block 7 can reciprocate in the Y direction (that is, the width direction or the first direction).

In the present exemplary embodiment, electromagnetic core block 6 includes electromagnet unit 61 (that is, an example of the stator body) capable of generating a magnetic field that changes cyclically, and holders 62 provided to electromagnet unit 61 to hold the positioning member.

Electromagnet unit 61 includes core 611 where main magnetic flux is generated when electromagnet unit 61 is driven, coil bobbin 612 that is held by core 611, and coil 613 that is wound around coil bobbin 612.

Core 611 may be made of a soft magnetic material (that is, a soft magnetic body), for example, little capable of retaining a magnetic force but having a high magnetic permeability. In the present exemplary embodiment, core 611 is formed of electromagnetic steel sheets capable of passing a large number of lines of magnetic force.

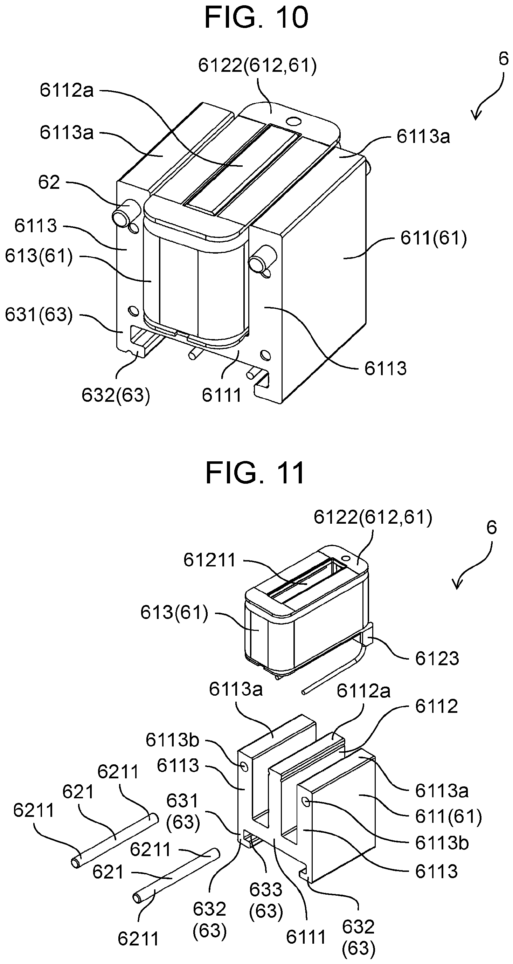

Fig. 10 is a perspective view illustrating exemplary electromagnetic core block 6 according to the exemplary embodiment. Fig. 11 is an exploded perspective view illustrating exemplary electromagnetic core block 6 according to the exemplary embodiment. As illustrated in Figs. 10 and 11, core 611 includes base portion 6111 having a shape of a substantially rectangular plate, and disposed on the lower side in a state where the thickness direction substantially is matched with the Z direction (that is, the vertical direction, the second direction, or the axial direction of the output shaft). Core 611 also includes central pillar 6112 having a shape of a substantially rectangular plate and provided continuously to base portion 6111 and in a manner protruding upwards from a central part of base portion 6111 in the Y direction (that is, the width direction or the first direction), in a state where the thickness direction substantially is matched with the Y direction (that is, the width direction or the first direction). Core 611 also includes a pair of outer pillars 6113 each having a shape of a substantially rectangular plate and continuously provided, in a manner protruding upwards from respective ends of base portion 6111 in the Y direction (that is, the width direction or the first direction), in a state where the thickness direction substantially is matched with the Y direction (that is, the width direction or the first direction). Base portion 6111, central pillar 6112, and the pair of outer pillars 6113 are integrally formed of an electromagnetic steel sheets.

Coil bobbin 612 may be made of an electrically insulating material such as a synthetic resin, for example. Coil bobbin 612 includes rectangular tubular portion 6121 having a substantially rectangular shape and around which coil 613 made of a conductive material is wound around an outer surface thereof, and a pair of flanges 6122 provided continuously to respective ends of rectangular tubular portion 6121 in the Z direction (that is, the vertical direction, the second direction, or the axial direction of the output shaft) and extending outwards, on the XY plane, from rectangular tubular portion 6121. Coil bobbin 612 having such a shape is provided with through-hole 61211 having a substantially quadrangular prism shape and penetrating coil bobbin 612 in the Z direction (that is, the vertical direction, the second direction, or the axial direction of the output shaft), at the center of coil bobbin 612. Central pillar 6112 of core 611 is inserted into through-hole 61211 in a state where coil 613 is wound around the outer surface of rectangular tubular portion 6121, so that coil bobbin 612 around which coil 613 has been wound is held on core 611. In this way, electromagnet unit 61 is thus formed.

When an AC current is supplied to coil 613 in a state where electromagnet unit 61 is thus formed, a magnetic flux (that is, the magnetic circuit) passing through each pillar of core 611 (e.g., central pillar 6112 and the pair of outer pillars 6113) is generated, and a magnetic pole face on which the N pole and the S pole are cyclically switched is formed on end faces 6112a and 6113a of the respective pillars (for example, central pillar 6112 and the pair of outer pillars 6113).

In the present exemplary embodiment, as illustrated in Figs. 4 and 11, extended portion 6123 is provided to the rear end of bottom flange 6122 in the X direction (that is, the depth direction or the third direction). Extended portion 6123 has coil holder groove 61231 for holding drawn coil 613.

Furthermore, in the present exemplary embodiment, as mentioned above, electromagnetic core block 6 has holders 62 for holding positioning member 8, provided to electromagnet unit 61. In the present exemplary embodiment, holder 62 is provided by inserting fastening rods 621 into respective through-holes 6113b provided in a manner passing through the pair of respective outer pillars 6113 in the X direction (that is, the depth direction or the third direction) in such a manner that ends 6211 of holders 62 protrude from corresponding outer pillar 6113. Positioning member 8 is held on electromagnet unit 61 by hooking cutouts 821 provided to positioning piece 82 of positioning member 8 to protruding ends 6211 of fastening rods 621, protruding ends 6211 protruding from outer pillars 6113. Positioning piece 82 will be described later.

In the present exemplary embodiment, fastening rods 621 made of a magnetic material such as an electromagnetic steel sheet are used. By using fastening rods 621 made of a magnetic material, fastening rod 621 can serve as a part of the magnetic circuit, and therefore, it is possible to prevent a magnetic loss even without increasing the thickness of the outer pillars. As a result, electromagnetic core block 6 can be reduced in size.

Magnetic block 7 includes two movable bodies capable of reciprocating in the Y direction (that is, the width direction or the first direction) independently from each other, and coupling member 73 that couples the two movable bodies in a manner allowing the two movable bodies to reciprocate in the Y direction (that is, the width direction or the first direction).

In the present exemplary embodiment, the two movable bodies reciprocate in the Y direction (that is, the width direction or the first direction) at the phases opposite to each other. By allowing the two movable bodies to reciprocate in the Y direction (that is, the width direction or the first direction) at the phases opposite to each other, the vibration energy generated by the respective movable bodies are canceled out. In this manner, the vibrations of the movable bodies generated by the reciprocation in the Y direction (that is, the width direction or the first direction) are suppressed.

Furthermore, in the present exemplary embodiment, only one of the two movable bodies is provided with an output shaft that can be joined to the attachment.

As described above, in the present exemplary embodiment, vibratory linear actuator 5 includes the two movable bodies, and only one of the movable bodies has the output shaft that can be joined to the attachment. Vibratory linear actuator 5 having such a configuration is suitable for the use in a device that causes one attachment (e.g. movable blade block 32 having movable blades 3222) to reciprocate, such as hair clipper 1 (that is, an example of the cutter).

Therefore, in the present exemplary embodiment, out of the two movable bodies, the movable body having output shaft 713 extending in the Z direction (that is, the vertical direction or the second direction) and enabled to connect movable blade block 32 (that is, an example of the attachment) serves as output movable body 71 capable of reciprocating in the Y direction (that is, the width direction or the first direction). The other movable body is configured to reciprocate in the Y direction (that is, the width direction or the first direction) at the phase opposite to that of output movable body 71, and serves as vibration-absorbing movable body 72 for suppressing vibration generated when output movable body 71 reciprocates in the Y direction (that is, the width direction or the first direction).

output movable body 71 and vibration-absorbing movable body 72 are then caused to reciprocate in the Y direction (that is, the width direction or the first direction) at the phases opposite to each other by a magnetic field that is generated by driving electromagnet unit 61 and that changes cyclically.

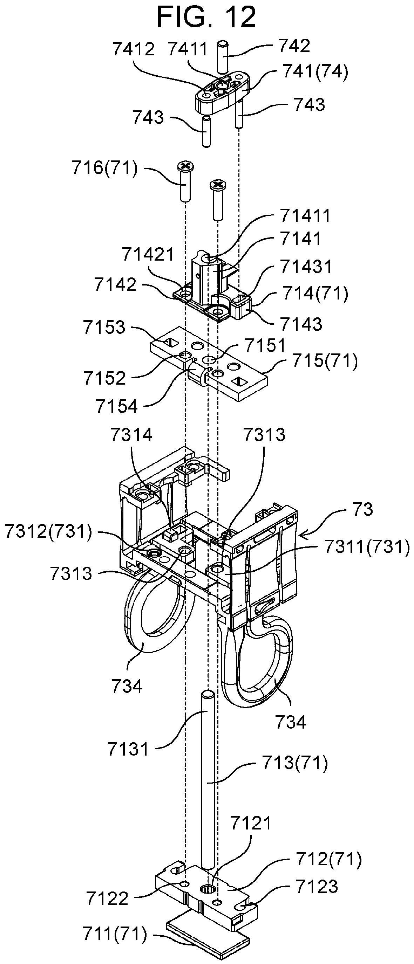

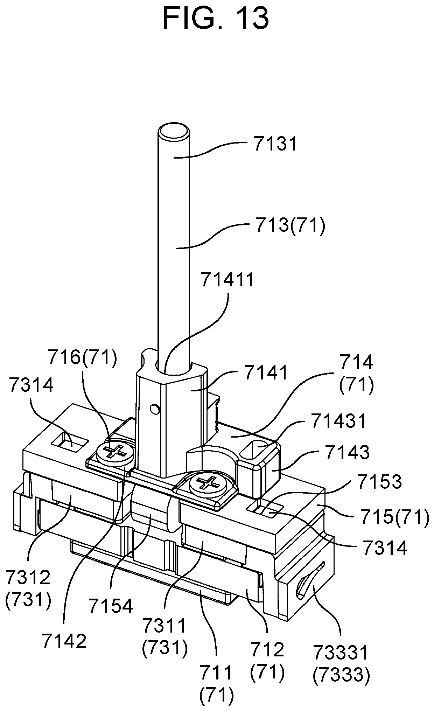

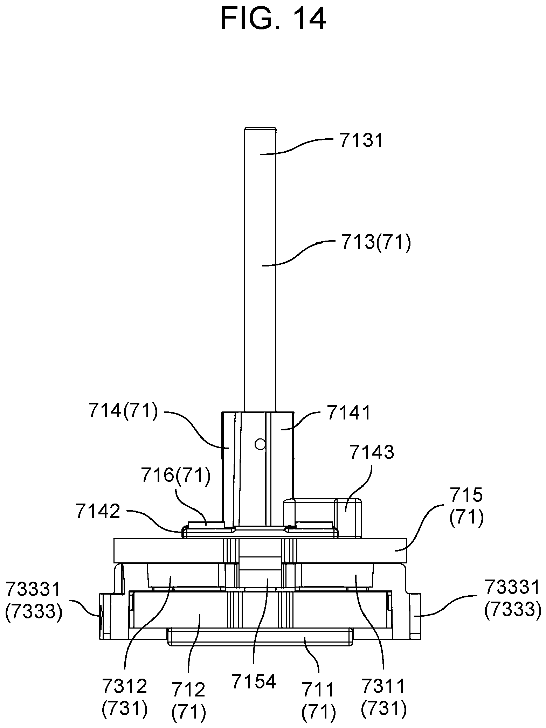

Fig. 12 is an exploded perspective view illustrating exemplary output movable body 71 and coupling member 73 according to the exemplary embodiment. Fig. 13 is a perspective view illustrating a state where exemplary output movable body 71 according to the exemplary embodiment is held in exemplary output movable body holder 731 provided to coupling member 73. Fig. 14 is a front view illustrating the state where exemplary output movable body 71 according to the exemplary embodiment is held in exemplary output movable body holder 731 provided to coupling member 73. In the present exemplary embodiment, as illustrated in Figs. 12 to 14, output movable body 71 includes output-side permanent magnet 711 and output-side back yoke 712 that is disposed on top of output-side permanent magnet 711 (that is, on the opposite side of where electromagnet unit 61 is located) and capable of forming a magnetic circuit.

In the present exemplary embodiment, output-side permanent magnet 711 has a shape of a substantially rectangular plate. As one example of output-side permanent magnet 711, a neodymium magnet may be used.

Output-side back yoke 712 has a shape of a substantially rectangular plate which is slightly larger than output-side permanent magnet 711, and may be made of a soft magnetic material such as an electromagnetic steel sheet or pure iron, for example.

Output-side permanent magnet 711 is fastened to the bottom surface of output-side back yoke 712 by adhesive or the like.

In the present exemplary embodiment, as described above, output movable body 71 includes output shaft 713 that extends in the Z direction (that is, the vertical direction or the second direction) and can be connected to movable blade block 32 (that is, an example of the attachment). This output shaft 713 is held in output shaft holder 714. In the manner described above, in the present exemplary embodiment, output movable body 71 includes output shaft 713 and output shaft holder 714 that holds output shaft 713.

Furthermore, in the present exemplary embodiment, output movable body 71 includes output-side weight 715. This output-side weight 715 adjusts the position and the mass of the center of gravity G1 of output movable body 71. Output-side weight 715 may be made of a material having a specific gravity greater than that of resin, such as a metal material.

Output movable body 71 is fastened, by rivets 716, to output movable body holder 731 of coupling member 73.

Specifically, fastening holes 7122 are formed on output-side back yoke 712. Output-side back yoke 712 is then disposed under output movable body holder 731, in such a manner that fastening holes 7122 communicate with respective fastening holes 7313 formed on output movable body holder 731.

Shaft-receptacle recess 7121 recessing downwards is provided on top of output-side back yoke 712, and the bottom end of output shaft 713 is inserted into shaft-receptacle recess 7121, to hold output shaft 713 on output-side back yoke 712.

Output-side back yoke 712 also has slits 7123 opening rearwards in the X direction (that is, the depth direction or the third direction), and mating pillars (not illustrated) provided on output movable body holder 731 are inserted into respective slits 7123, so that output-side back yoke 712 is temporarily held by output movable body holder 731.

Fastening holes 7152 are also provided on output-side weight 715. Output-side weight 715 is disposed on top of output movable body holder 731 in such a manner that fastening holes 7152 thereof communicate with fastening holes 7313 of output movable body holder 731.

Output-side weight 715 also has output shaft insertion hole 7151 penetrating through output-side weight 715 in the Z direction (that is, the vertical direction or the second direction), and output-side weight 715 is disposed on top of output movable body holder 731 in which output shaft 713 is inserted into output shaft insertion hole 7151.

Furthermore, in the present exemplary embodiment, output-side weight 715 is provided with mass fine adjustment portion 7154, in such a manner that mass fine adjustment portion 7154 protrudes in the thickness direction (that is, in the Z direction), and mass fine adjustment portion 7154 finely adjusts the position and the mass of the center of gravity G1 of output movable body 71.

Note that, in the present exemplary embodiment, output movable body holder 731 includes first output movable body holder 7311 positioned on one side, and second output movable body holder 7312 positioned on the other side, in the Y direction (that is, the width direction or the first direction). At the center in the Y direction (that is, the width direction or the first direction), there is a space without any output movable body holder 731. Therefore, output movable body holder 731 has no hole for inserting output shaft 713.

Output-side weight 715 also has positioning holes 7153 penetrating through output-side weight 715 in the Z direction (that is, the vertical direction or the second direction). By inserting positioning protrusions 7314 provided to output movable body holder 731 into these positioning holes 7153, output-side weight 715 is temporarily held by output movable body holder 731.

Output shaft holder 714 is made of an electrically insulating material such as synthetic resin. Output shaft holder 714 includes holder body 7141 provided with holding hole 71411 into and in which output shaft 713 is inserted and held, and fastening portion 7142 that is provided continuously to holder body 7141 and that has fastening holes 71421. Output shaft holder 714 is then disposed on top of output-side weight 715 in a state where fastening holes 71421 communicates with fastening holes 7152 of output-side weight 715.

In the present exemplary embodiment, magnetic block 7 includes link mechanism 74. By connecting output movable body 71 and vibration-absorbing movable body 72 by using link mechanism 74, output movable body 71 and vibration-absorbing movable body 72 always reciprocate at the opposite phases. Used in the present exemplary embodiment is link mechanism 74 including link body 741 made of resin; central shaft 742 made of a metal and inserted into central through-hole 7411 provided at the center of link body 741 so as to penetrate link body 741 in the Z direction (that is, the vertical direction or the second direction); and swing shafts 743 made of a metal and inserted into a pair of outer through-holes 7412, that are formed on respective ends of link body 741 so as to penetrate link body 741 in the Z direction (that is, the vertical direction or the second direction).

Output movable body 71 therefore has a portion for holding one end of link mechanism 74. Specifically, output shaft holder 714 includes link mechanism holder 7143 integrally molded with holder body 7141 and fastening portion 7142. output movable body 71 is connected to link mechanism 74 by inserting one of swing shaft 743 into long hole 71431 provided to link mechanism holder 7143. Similarly to holder body 7141 and fastening portion 7142, link mechanism holder 7143 is made of an electrically insulating material such as synthetic resin.

By fastening these members arranged in the order described above using rivets 716, output movable body 71 is held by output movable body holder 731, as illustrated in Figs. 13 and 14.

Furthermore, by mating end 7131 of output shaft 713 of output movable body 71 with mating recess 3211 provided to guide plate 321, as illustrated in Figs. 15 and 16, movable blade block 32 (that is, an example of the attachment) is connected to output shaft 713.

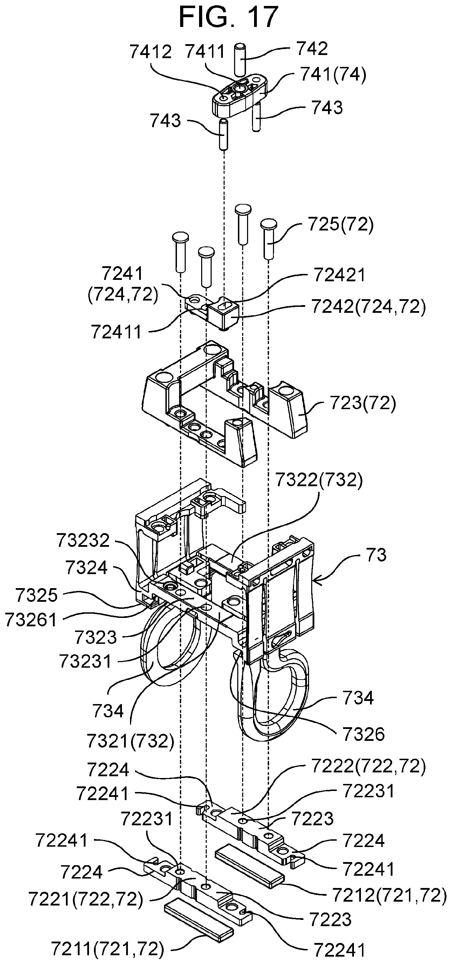

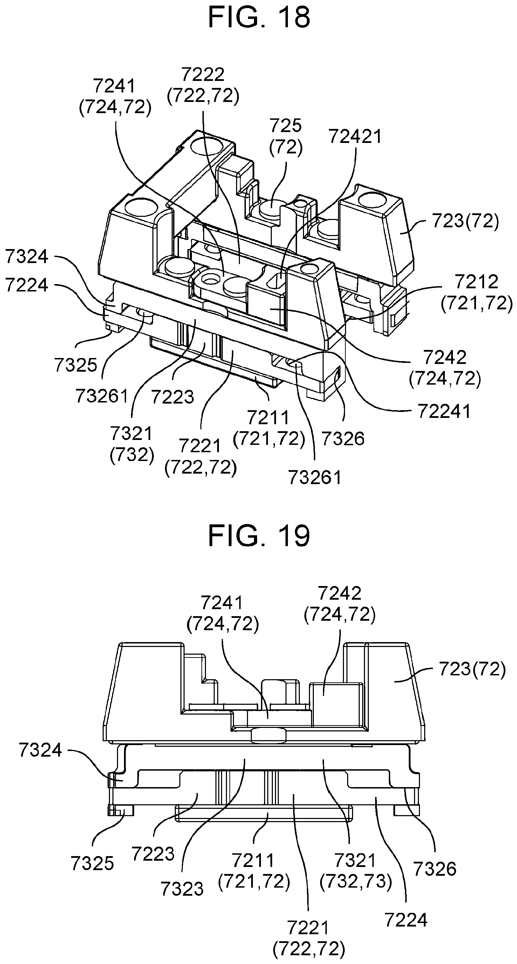

Fig. 17 is an exploded perspective view illustrating an example of vibration-absorbing movable body 72 and coupling member 73 according to the exemplary embodiment. Fig. 18 is a perspective view illustrating a state where exemplary vibration-absorbing movable body 72 according to the exemplary embodiment is held in the exemplary vibration-absorbing movable body holder 732 provided to coupling member 73. Fig. 19 is a front view illustrating a state where exemplary vibration-absorbing movable body 72 according to the exemplary embodiment is held in exemplary vibration-absorbing movable body holder 732 provided to coupling member 73. As illustrated in Figs. 17 to 19, vibration-absorbing movable body 72 includes absorbing-side permanent magnet 721 and absorbing-side back yoke 722 that is disposed on top of absorbing-side permanent magnet 721 (that is, on the opposite side to a side where electromagnet unit 61 is located) and capable of forming a magnetic circuit.

In the present exemplary embodiment, absorbing-side permanent magnet 721 also has a shape of a substantially rectangular plate. As absorbing-side permanent magnet 721, too, a neodymium magnet may be used.

Absorbing-side back yoke 722 also has a shape of a substantially rectangular plate which is slightly larger than absorbing-side permanent magnet 721. Absorbing-side back yoke 722 can also be made of a soft magnetic material such as an electromagnetic steel sheet or pure iron. Absorbing-side permanent magnet 721 is also fastened to the bottom surface of absorbing-side back yoke 722 by adhesive or the like.

In the present exemplary embodiment, vibration-absorbing movable body holder 732 includes first vibration-absorbing movable body holder 7321 positioned on one side (more specifically, on the front side) of output movable body holder 731 in the X direction (that is, the depth direction or the third direction), and second vibration-absorbing movable body holder 7322 positioned on the other side (more specifically, on the rear side) of output movable body holder 731 in the X direction (that is, the depth direction or the third direction). In this manner, output shaft 713 is disposed near the center of magnetic block 7 (that is, an example of the movable element, here, output movable body 71 and vibration-absorbing movable body 72), and the overall shape of magnetic block 7 can be well-balanced.

Absorbing-side back yoke 722 to which absorbing-side permanent magnet 721 has been fastened is held by each of first vibration-absorbing movable body holder 7321 and second vibration-absorbing movable body holder 7322.

Specifically, absorbing-side back yoke 722 includes first absorbing-side back yoke 7221 and second absorbing-side back yoke 7222. First absorbing-side back yoke 7221 is held on first vibration-absorbing movable body holder 7321. Second absorbing-side back yoke 7222 is held on second vibration-absorbing movable body holder 7322. Absorbing-side permanent magnet 721 also includes first absorbing-side permanent magnet 7211 and second absorbing-side permanent magnet 7212. First absorbing-side permanent magnet 7211 is fastened to the bottom surface of first absorbing-side back yoke 7221 by adhesive or the like. Second absorbing-side permanent magnet 7212 is fastened to the bottom surface of second absorbing-side back yoke 7222 by adhesive or the like.

In the present exemplary embodiment, vibration-absorbing movable body 72 also includes absorbing-side weight 723. This absorbing-side weight 723 is configured to adjust the position and mass of the center of gravity G2 of vibration-absorbing movable body 72.

In the present exemplary embodiment, absorbing-side weight 723 includes first fastening base portion 7231 fastened to first vibration-absorbing movable body holder 7321, second fastening base portion 7232 fastened to second vibration-absorbing movable body holder 7322, and connecting base portion 7233 connecting first fastening base portion 7231 to second fastening base portion 7232. First absorbing-side back yoke 7221 to which first absorbing-side permanent magnet 7211 is fastened and second absorbing-side back yoke 7222 to which second absorbing-side permanent magnet 7212 is fastened are connected to each other with absorbing-side weight 723 therebetween. In this manner, first absorbing-side back yoke 7221 to which first absorbing-side permanent magnet 7211 is fastened, second absorbing-side back yoke 7222 to which second absorbing-side permanent magnet 7212 is fastened, and absorbing-side weight 723 are integrated. In this manner, one vibration-absorbing movable body 72 having portions disposed on both sides in the X direction (that is, the depth direction or the third direction) of output movable body holder 731 is achieved.

In addition, as described above, magnetic block 7 includes link mechanism 74, and vibration-absorbing movable body 72 also has a portion for holding the other end of link mechanism 74. Specifically, vibration-absorbing movable body 72 includes link mechanism holder member 724 made of an electrically insulating material such as synthetic resin. The other swing shaft 743 is inserted into long hole 72421 formed on link mechanism holder member 724. In this way, vibration-absorbing movable body 72 is connected to link mechanism 74.

This vibration-absorbing movable body 72 is fastened, by rivets 725, to vibration-absorbing movable body holder 732 provided to coupling member 73.

Specifically, absorbing-side back yoke 722 includes body 7223 and a pair of insert walls 7224 provided continuously to body 7223, on respective sides of body 7223 in the Y direction (that is, the width direction or the first direction). In the present exemplary embodiment, the pair of insert walls 7224 is thinner than body 7223 in the Z direction (that is, the vertical direction or the second direction). Absorbing-side back yoke 722 has a projecting shape with body 7223 projecting upwards in front view (that is, a state viewed along the X direction). Body 7223 has fastening holes 72231. Absorbing-side back yoke 722 is disposed under vibration-absorbing movable body holder 732 in such a manner that fastening holes 72231 communicates with fastening holes 73231 (that is, an example of a fastening portion counterpart) provided to body 7323 of vibration-absorbing movable body holder 732.

Vibration-absorbing movable body holder 732 has insertion grooves 7326 into which insert walls 7224 of absorbing-side back yoke 722 are inserted. In the present exemplary embodiment, a step portion 7324 is provided on each side of body 7323 in the Y direction (that is, the width direction or the first direction). The bottom end of each step portion 7324 has holding wall 7325 for holding insert wall 7224, in such a manner that holding wall 7325 protrudes inwards in the Y direction (that is, the width direction or the first direction). The space defined by step portion 7324 and holding wall 7325 serves as an insertion groove 7326. By inserting insert walls 7224 into insertion grooves 7326, absorbing-side back yoke 722 is temporarily held by vibration-absorbing movable body holder 732.

Each of insert walls 7224 of absorbing-side back yoke 722 has slit 72241 that opens rearwards in the X direction (that is, the depth direction or the third direction). Mating pillar 73261 provided on each of insertion grooves 7326 of vibration-absorbing movable body holder 732 is inserted into slit 72241 so that absorbing-side back yoke 722 can be temporarily held by vibration-absorbing movable body holder 732.

Absorbing-side weight 723 has fastening holes 72341 (that is, an example of the fastening portion). absorbing-side weight 723 is disposed on top of vibration-absorbing movable body holder 732 in such a manner that fastening holes 72341 communicate with fastening holes 73231 provided to vibration-absorbing movable body holder 732.

Further, link mechanism holder member 724 is formed by integrally molding fastening portion 7241 fastened to absorbing-side weight 723 and link mechanism holder 7242 which has long hole 72421 into which the other swing shaft 743 of link mechanism 74 is inserted. Fastening portion 7241 has fastening hole 72411, and link mechanism holder member 724 is disposed on top of absorbing-side weight 723 in such a manner that fastening hole 72411 communicates with fastening hole 72341 formed on absorbing-side weight 723. In the present exemplary embodiment, link mechanism holder member 724 is fastened to first fastening base portion 7231 of absorbing-side weight 723.

By fastening the members arranged in this order by the rivets 725, as illustrated in Figs. 18 and 19, vibration-absorbing movable body 72 is held by vibration-absorbing movable body holder 732.

In the present exemplary embodiment, coupler 733 couples output movable body holder 731 holding output movable body 71, to vibration-absorbing movable body holder 732 holding vibration-absorbing movable body 72.

As described above, in the present exemplary embodiment, coupling member 73 includes coupler 733 that couples output movable body holder 731 and vibration-absorbing movable body holder 732.

Coupler 733 includes: a pair of base portions 7331 disposed on the upper side of coupler 733 in the Z direction (that is, the vertical direction or the second direction) on respective sides of coupler 733 in the Y direction (that is, the width direction or the first direction); leaf springs 7332 extending downwards from base portions 7331; and connectors 7333 connecting bottom ends of the leaf springs 7332 and respective movable part holders (more specifically, output movable body holder 731, first vibration-absorbing movable body holder 7321, and second vibration-absorbing movable body holder 7322).

In the present exemplary embodiment, leaf springs 7332 includes: output-side leaf spring 73321 disposed at the center in the X direction (that is, the depth direction or the third direction) and connected to output movable body holder 731; and vibration absorbing-side leaf springs 73322 disposed on the front side and the rear side, In the X direction (that is, the depth direction or the third direction) and connected to first vibration-absorbing movable body holder 7321 and second vibration-absorbing movable body holder 7322, respectively. Each of connectors 7333 also includes output-side connector 73331 disposed at the center in the X direction (that is, the depth direction or the third direction) and connecting the bottom of output-side leaf spring 73321 to output movable body holder 731, and absorbing-side connectors 73332 disposed on the front side and the rear side in the X direction (that is, the depth direction or the third direction), and connecting the bottom ends of vibration absorbing-side leaf springs 73322 to first vibration-absorbing movable body holder 7321 and second vibration-absorbing movable body holder 7322, respectively.

Furthermore, in the present exemplary embodiment, coupling member 73 includes coupling springs 734 that adjust the amplitudes (that is, the resonance frequency) of output movable body 71 and vibration-absorbing movable body 72. These coupling springs 734 couple output movable body holder 731 to vibration-absorbing movable body holder 732. Specifically, output movable body holder 731 and first vibration-absorbing movable body holder 7321 are coupled by coupling spring 734 disposed on one side in the Y direction (that is, the width direction or the first direction), and output movable body holder 731 and second vibration-absorbing movable body holder 7322 are coupled by coupling spring 734 disposed on the other side in the Y direction (that is, the width direction or the first direction). At this time, the amplitude (that is, the resonance frequency) of output movable body 71 and vibration-absorbing movable body 72 can be set to a desired amplitude, by setting the spring constant of the coupling spring 734 to a predetermined value. In the present exemplary embodiment, coupling springs 734 are disposed so as to be positioned at a level lower than coupler 733, and electromagnet unit 61 is disposed between the pair of coupling springs 734.

By then fastening coupling members 73 to positioning member 8, output movable body 71 and vibration-absorbing movable body 72 are enabled to reciprocate relatively with respect to positioning member 8 in the Y direction (that is, the width direction or the first direction).

Specifically, coupling member 73 includes fastening pieces 735 continuously provided so as to protrude inwards from the pair of respective base portions 7331, in the Y direction (that is, the width direction or the first direction). By fastening these fastening pieces 735 to fastening portions 81 of positioning member 8, coupling member 73 is fastened to positioning member 8.

In the present exemplary embodiment, positioning member 8 includes: a pair of fastening portions 81 provided on top, on respective sides of positioning member 8 in the Y direction (that is, the width direction or the first direction); positioning pieces 82 protruding downwards from the ends of respective fastening portions 81 in the X direction (that is, the depth direction or the third direction), and provided continuously to respective fastening portions 81, and connecting portion 83 connecting positioning pieces 82 that are positioned adjacently to each other in the Y direction (that is, the width direction or the first direction). Opening 84 opening upward is formed between the pair of fastening portion 81 so that positioning member 8 does not obstruct the reciprocation of output shaft 713 in the Y direction (that is, the width direction or the first direction).

In the present exemplary embodiment, each of fastening portion 81 has screw holes 811, and is disposed under corresponding one of fastening pieces 735 in such a manner that screw holes 811 communicate with screw holes 7351 provided to fastening piece 735. At this time, positioning protrusions 7352 protruding downwards from each fastening piece 735 are inserted into respective positioning holes 812 provided to fastening portion 81. Positioning member 8 is thus temporarily held by coupling member 73.

By fastening the members arranged in the order described above using screws 9, magnetic block 7 is held in positioning member 8 as illustrated in Figs. 3 to 5. In this way, movable bodies (more specifically, output movable body 71 and vibration-absorbing movable body 72) are suspended from positioning member 8 in a state where the permanent magnets (more specifically, output-side permanent magnet 711 and absorbing-side permanent magnet 721) are located at lower positions.

In the present exemplary embodiment, in a state where magnetic block 7 is held inside positioning member 8, the upper end of central shaft 742 of link mechanism 74 is inserted into shaft hole 813 provided on fastening portion 81. In this manner, as output movable body 71 and vibration-absorbing movable body 72 reciprocate, link mechanism 74 is caused to rotate about central shaft 742.

In the present exemplary embodiment, coupling member 73 is integrally formed of a material having an electrical insulating property such as a synthetic resin. Positioning member 8 is formed of a single rigid metal plate punched to have a predetermined outer shape, and applied with plastic working, such as bending, as appropriate.

In a state where magnetic block 7 is held inside positioning member 8, cutouts 821 opening downwards at the bottom end of each positioning piece 82 are then locked onto holder 62. In this manner, vibratory linear actuator 5 is formed.

Thus, the permanent magnets (more specifically, output-side permanent magnet 711 and absorbing-side permanent magnet 721) of the respective movable bodies (more specifically, output movable body 71 and vibration-absorbing movable body 72) are disposed so as to face the end face of core 611 (more specifically, end face 6112a of central pillar 6112 and end faces 6113a of outer pillars 6113), with a predetermined magnetic gap therebetween.

At this time, output-side permanent magnet 711 and absorbing-side permanent magnet 721 are disposed at polarities opposite to each other. When electromagnet unit 61 is driven, forces moving output-side permanent magnet 711 and absorbing-side permanent magnet 721 in opposite directions are exerted in the Y direction (that is, the width direction or the first direction).

Thus, when electromagnet unit 61 is driven, output movable body 71 and vibration-absorbing movable body 72 are caused to reciprocate in the Y direction (that is, the width direction or the first direction) at the phases opposite to each other by the magnetic field that changes cyclically.

At this time, by matching the position (the position in the XYZ coordinates in this example) of the center of gravity G2 of vibration-absorbing movable body 72 to the position (the position in the XYZ coordinates in this example) of the center of gravity G1 of output movable body 71, the vibration energy generated in the movable bodies (more specifically, output movable body 71 and vibration-absorbing movable body 72) can be cancelled out more efficiently.

Therefore, it is preferable to bring the position of the center of gravity G2 of vibration-absorbing movable body 72 as close as possible to the position of the center of gravity G1 of output movable body 71.

However, in vibratory linear actuator 5 according to the present exemplary embodiment, only output movable body 71, out of output movable body 71 and vibration-absorbing movable body 72, has output shaft 713. The center of gravity G1 of output movable body 71 is therefore at a relatively high position. Hence, without the use of absorbing-side weight 723, the position of the center of gravity G1 of output movable body 71 and the position of the center of gravity G2 of vibration-absorbing movable body 72 would remain distant.

Therefore, in the present exemplary embodiment, by using absorbing-side weight 723, the position of the center of gravity G2 of vibration-absorbing movable body 72 is moved closer to the position of the center of gravity G1 of output movable body 71. Note that the position of the center of gravity G1 of output movable body 71 to be compared herein may be the position of the center of gravity of output movable body 71 including or not including movable blade block 32 (that is, an example of the attachment).

Furthermore, in the present exemplary embodiment, by enabling absorbing-side weight 723 to be disposed by making effective use of the space around vibration-absorbing movable body holder 732, it is possible to absorb vibration generated by the reciprocation of output movable body 71 in the Y direction (that is, the width direction or the first direction) with a size reduction.

Specifically, absorbing-side weight 723, which is for adjusting to move the position of the center of gravity G2 of vibration-absorbing movable body 72 closer to the position of the center of gravity G1 of output movable body 71, is directly fastened to vibration-absorbing movable body holder 732.

In this manner, by directly fastening absorbing-side weight 723 to vibration-absorbing movable body holder 732, absorbing-side weight 723 can be provided while making more effective use of the space around vibration-absorbing movable body holder 732.

For example, if absorbing-side weight 723 is fastened to vibration-absorbing movable body holder 732 with a resin molded article therebetween, the resin molded article may limit the space available for absorbing-side weight 723; or the shape of the resin molded article may limit the usable shape of absorbing-side weight 723. These limitations may restrict the degree of freedom in shape and in the arrangement of absorbing-side weight 723. Therefore, when the position of the center of gravity G2 of vibration-absorbing movable body 72 is matched with the position of the center of gravity G1 of output movable body 71, absorbing-side weight 723 would end up occupying a larger space.

By contrast, in a case where absorbing-side weight 723 is directly fastened to vibration-absorbing movable body holder 732, the limitations in the shape and the arrangement space due to the resin molded article fastened to vibration-absorbing movable body holder 732 are eliminated, so that the degree of freedom in shape and arrangement of absorbing-side weight 723 can be improved.

As a result, it becomes possible to dispose absorbing-side weight 723 within the space around vibration-absorbing movable body holder 732 more efficiently, and to reduce the space occupied by absorbing-side weight 723 when the position of the center of gravity G2 of vibration-absorbing movable body 72 is matched with the position of the center of gravity G1 of output movable body 71. In other words, it is possible to absorb the vibration generated by the reciprocation of output movable body 71 in the Y direction (that is, the width direction or the first direction) more reliably with reduction in the space occupied by absorbing-side weight 723.

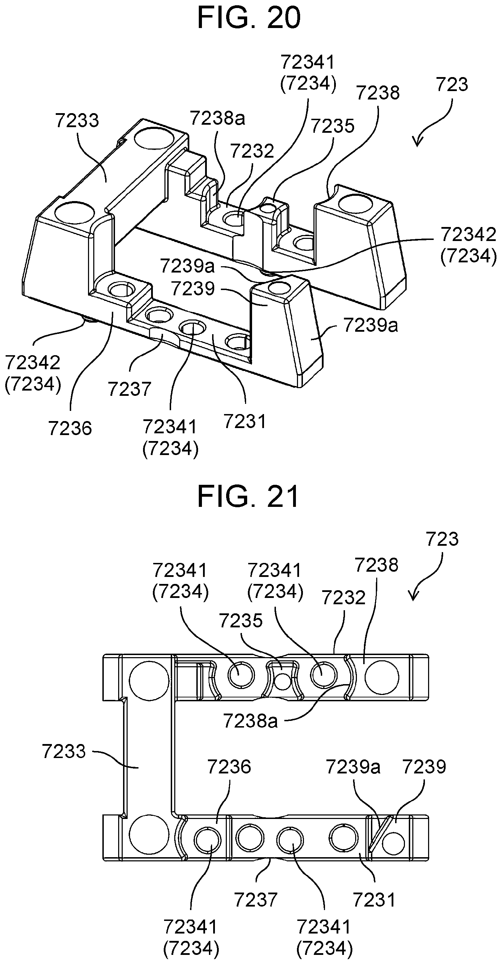

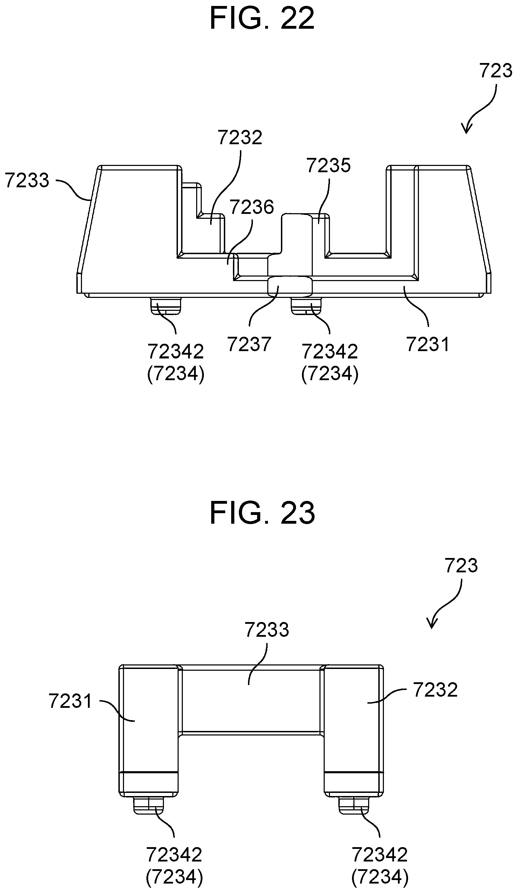

Fig. 20 is a perspective view illustrating exemplary absorbing-side weight 723 according to the exemplary embodiment. Fig. 21 is a plan view illustrating exemplary absorbing-side weight 723 according to the exemplary embodiment. Fig. 22 is a front view illustrating exemplary absorbing-side weight 723 according to the exemplary embodiment. Fig. 23 is a side view illustrating exemplary absorbing-side weight 723 according to the exemplary embodiment. In the present exemplary embodiment, as illustrated in Figs. 20 to 23, absorbing-side weight 723 has fastening holes 72341 and fastening protrusions 72342 as fastening portions (that is, an example of the fastening portion). Fastening holes 72341 and fastening holes 73231 that are fastening portion counterparts provided to vibration-absorbing movable body holder 732 are fastened with rivet 725. In this manner, absorbing-side weight 723 and vibration-absorbing movable body holder 732 are fastened in a state where the peripheral edge of each fastening hole 72341 is held in contact with the peripheral edge of corresponding fastening hole 73231.

In addition, by inserting fastening protrusions 72342 into fastening recesses 73232 that are fastening portion counterparts (that is, an example of the fastening portion counterpart) provided to vibration-absorbing movable body holder 732 without any member therebetween, absorbing-side weight 723 and vibration-absorbing movable body holder 732 are fastened to each other.

As described above, in the present exemplary embodiment, by fastening the fastening portions (more specifically, fastening holes 72341 and fastening protrusions 72342) formed on absorbing-side weight 723 to the fastening portion counterpart (more specifically, fastening holes 73231 and fastening recesses 73232) provided to vibration-absorbing movable body holder 732, respectively, absorbing-side weight 723 is fastened to vibration-absorbing movable body holder 732.

In this manner, absorbing-side weight 723 can be fastened to vibration-absorbing movable body holder 732 more firmly, and displacement of position where absorbing-side weight 723 is fastened can be suppressed more reliably. That is, it is possible to prevent the position of the center of gravity G2 of vibration-absorbing movable body 72 from becoming farther away from the position of the center of gravity G1 of output movable body 71 than that of the initial position. In this manner, it is possible to suppress an increase in vibration caused by the displacement of the position where absorbing-side weight 723 is fastened, so that it becomes possible to absorb vibration generated when output movable body 71 reciprocates in the Y direction (that is, the width direction or the first direction), more reliably.

Furthermore, in the present exemplary embodiment, absorbing-side weight 723 is formed as a molded article using a mold such as a metal mold, a sand mold, or a plaster mold. Therefore, the degree of freedom in the shape of absorbing-side weight 723 can be further improved.

By using a molded article, which is formed using a mold, as absorbing-side weight 723 in the manner described above, it becomes possible to use a more complex shape for absorbing-side weight 723. For example, it becomes easier to form absorbing-side weight 723 having a shape as illustrated in Figs. 20 to 23, that is, a shape including protrusion 7235, step portion 7236, recess groove 7237, curved portion 7238 having curved surface 7238a, and inclined portion 7239 having inclined surface 7239a.

As described above, by facilitating the use of a more complex shape for absorbing-side weight 723, even in a structure in which only small and limited space is available for absorbing-side weight 723, absorbing-side weight 723 can be formed to have a shape adapted to the available space. In this manner, it becomes possible to make efficient use of the limited space.

Examples of the molded article molded using a mold include a die-casted article, a metal-injection molded (MIM) article, a lost-wax molded article, an insert-molded article, and a resin-molded article.

However, absorbing-side weight 723 does not need to be a molded article, and absorbing-side weight 723 may be manufactured using various methods. For example, absorbing-side weight 723 may be a pressed article, a cut article, a casted article, or a sintered article.

Furthermore, in the present exemplary embodiment, the position of the center of gravity G2 of vibration-absorbing movable body 72 is matched with the position of the center of gravity G1 of output movable body 71 with reduction in the space occupied by absorbing-side weight 723.

Specifically, using absorbing-side weight 723 having a specific gravity of 2.0 or more and 14.0 or less, the position of the center of gravity G2 of vibration-absorbing movable body 72 is matched with the position of the center of gravity G1 of output movable body 71.

In the present exemplary embodiment, the position of the center of gravity G2 of vibration-absorbing movable body 72 is matched with the position of the center of gravity G1 of output movable body 71 using absorbing-side weight 723 which is a die-casted article casted using a zinc alloy having a specific gravity of 6.6.

As described above, by setting the specific gravity of absorbing-side weight 723 to be 2.0 or more, it becomes possible to use absorbing-side weight 723 having a specific gravity greater than that of 1.5, which is the specific gravity of a general resin. Therefore, when the position of the center of gravity G2 of vibration-absorbing movable body 72 is matched with the position of the center of gravity G1 of output movable body 71, the space occupied by absorbing-side weight 723 can be made smaller than the space occupied when a resin molded article is used. In addition, by setting the specific gravity of absorbing-side weight 723 to be 14.0 or less, for example, it becomes possible to use a material such as a zinc alloy that is suitable for the mass production, as the material of absorbing-side weight 723. By making the mass production of absorbing-side weight 723 possible, the absorbing-side weight can be manufactured at a lower cost.

Therefore, by setting the specific gravity of absorbing-side weight 723 to be 2.0 or more and 14.0 or less, it is possible to obtain absorbing-side weight 723 capable of reducing the volume required in matching the position of the center of gravity G2 of vibration-absorbing movable body 72 with the position of the center of gravity G1 of output movable body 71, at a lower cost.

Furthermore, in order to match the position of the center of gravity G2 of vibration-absorbing movable body 72 with the position of the center of gravity G1 of output movable body 71 with a smaller volume, the specific gravity of absorbing-side weight 723 is preferably set to be 5.0 or more.

Note that the material for forming absorbing-side weight 723 is not limited to a zinc alloy, and it is possible to use various materials to form absorbing-side weight 723. For example, it is also possible to use a metal such as brass, iron, stainless steel, or tungsten, or a mixture of a resin with a metal such as brass, iron, stainless steel, or tungsten to form absorbing-side weight 723. It is also possible to use a resin having a specific gravity of 2.0 or more.

Furthermore, in the present exemplary embodiment, the mass of vibration-absorbing movable body 72 is set greater than the mass of output movable body 71.

In this manner, the mass of vibration-absorbing movable body 72 is set equal to or greater than the total mass of movable blade block 32 (that is, an example of the attachment) and output movable body 71 together, so that reciprocation of output movable body 71 to which movable blade block 32 (that is, an example of the attachment) is connected is promoted rather than reciprocation of vibration-absorbing movable body 72.

Vibratory linear actuator 5 having such a configuration is put in use in a state of being fastened to housing 4 or another component 43 such as a circuit board. In other words, vibratory linear actuator 5 is enabled to be fastened to another component 43 such as housing 4 or the circuit board.

Therefore, in the present exemplary embodiment, fastening portion 63 is provided continuously to electromagnet unit 61 (that is, an example of the stator body), so that fastening portion 63 can be fastened to fastening portion counterpart 431 provided to another component 43.

In the present exemplary embodiment, electromagnetic core block 6 (that is, an example of the stator) can be reduced in size in the Y direction (that is, in the width direction), and can also suppress deformation of fastening portion counterpart 431.

Specifically, fastening portion 63 includes a pair of legs 631 protruding downwards from bottom surface 6111a (that is, one surface) of electromagnet unit 61 (that is, an example of the stator body) and facing each other, in a side view in a state where electromagnetic core block 6 (that is, an example of the stator) is positioned in an orientation in which bottom surface 6111a (that is, one surface) faces downwards.

In the present exemplary embodiment, the pair of legs 631 is formed at both ends of core 611 in the Y direction, and the outer surfaces of legs 631 are in flush with the side surfaces of outer pillars 6113. In this manner, a space as wide as possible is ensured between the pair of legs 631.

Furthermore, fastening portion 63 includes a pair of protrusions 632 provided continuously to respective legs 631 and protruding inwards in direction (that is, the Y direction) in which legs 631 face each other, in a side view in a state electromagnetic core block 6 (that is, an example of the stator) is disposed in an orientation in which bottom surface 6111a (that is, one surface) of electromagnet unit 61 (that is, one surface) faces downwards.

In the manner described above, in the present exemplary embodiment, the shape of fastening portion 63, which is enabled to be fastened to fastening portion counterpart 431 of another component 43, has a shape of a hook protruding inwards.

In this manner, electromagnetic core block 6 (that is, an example of the stator) can be reduced in size in the direction in which legs 631 face each other (that is, the Y direction) to suppress the deformation of fastening portion counterpart 431.

Specifically, because fastening portion 63 does not have any outward projection, with respect to electromagnet unit 61 (that is, an example of the stator body), in the direction in which legs 631 face each other (that is, the Y direction), electromagnetic core block 6 (that is, an example of the stator) can be reduced in size in the direction in which legs 631 face each other (Y direction).

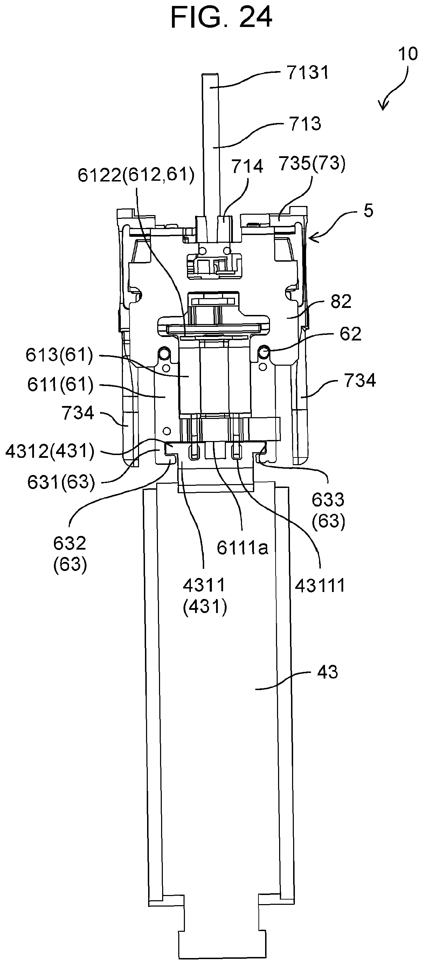

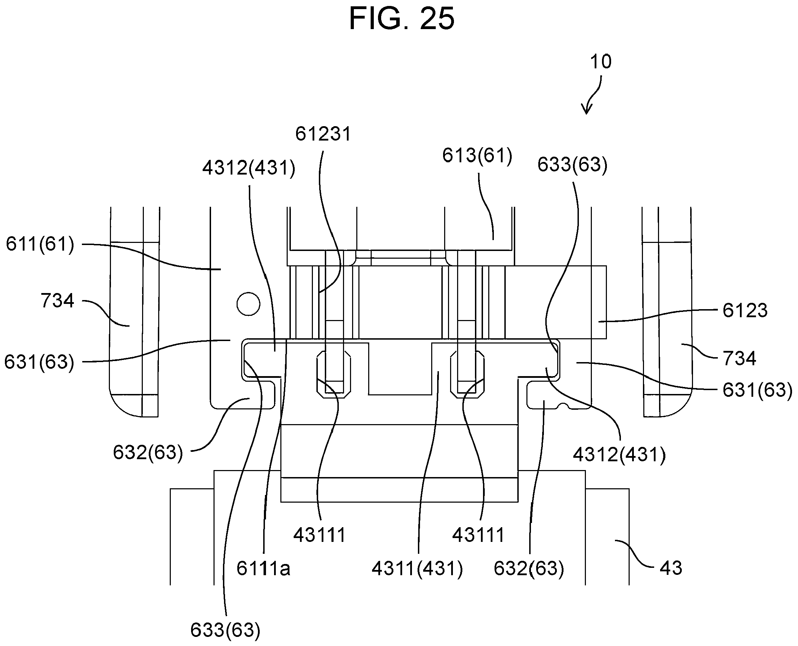

Fig. 24 is a diagram schematically illustrating exemplary fastening structure 10 for fastening vibratory linear actuator 5 according to the exemplary embodiment to fastening portion counterpart 431. Fig. 25 is an enlarged view illustrating a portion where vibratory linear actuator 5 in Fig. 24 is fastened to fastening portion counterpart 431. In a case where electromagnetic core block 6 has fastening portion 63 which has been described above, when vibratory linear actuator 5 is fastened to another component 43, vibratory linear actuator 5 is fastened in the manner illustrated in Figs. 24 and 25. In other words, in a state where flange 4312 projecting outwards in the Y direction from portion counterpart body 4311 of fastening portion counterpart 431 is fitted into fitting space 633 defined by the bottom surface of base portion 6111, the inner surface of respective legs 631, and the top surfaces of respective protrusions 632, a part in which the flange 4312 of fastening portion counterpart 431 is formed is fitted into a pair of legs 631. In this way, vibratory linear actuator 5 is fastened to another component 43. In this manner, the portion of fastening portion counterpart 431 having flange 4312 is held between the pair of legs 631, and vibratory linear actuator 5 is fastened to another component 43 thereby. In this manner, a structure in which fastening portion counterpart 431 is held between the pair of legs 631 in a state where the fastening portion counterpart is prevented from falling off by the pair of protrusions 632, that is, fastening structure 10 for fastening the vibratory linear actuator to the fastening portion counterpart illustrated in Figs. 24 and 25 is achieved.

With this structure, it becomes possible to set the thickness of fastening portion counterpart 431 (more specifically, the portion including the fastening portion counterpart body 4311 and flange 4312) in the Y direction to any size but up to the size of the width between the pair of legs 631. This structure can therefore increase the fastening strength between fastening portion counterpart 431 and fastening portion 63, to an extent inhibiting deformation of fastening portion counterpart 431, while keeping the size of fastening portion counterpart 431 within the size of the width between the pair of legs 631.

Note that, in the present exemplary embodiment, the thickness of fastening portion counterpart 431 (more specifically, the fastening portion counterpart body 4311 and flange 4312) achieving a desired strength or greater is smaller than the size of the width between the pair of legs 631. Therefore, in vibratory linear actuator 5 described in the present exemplary embodiment, fastening portion counterpart body 4311 has a recess and coil insertion holes 43111.

With the configuration described in the present exemplary embodiment described above, the part nipped between the pair of legs 631 can be designed to any appropriate shape. Therefore, it is possible to improve the degree of freedom in shape of fastening portion counterpart 431 while ensuring a predetermined fastening strength.

Furthermore, with this configuration for inhibiting the deformation of fastening portion counterpart 431, it is also possible to suppress creeping, which is caused by a continuous application of vibrating force to fastening portion counterpart 431 due to vibratory linear actuator 5. In this manner, the fastening force between fastening portion counterpart 431 and fastening portion 63 can be maintained for a longer time period. Such a structure also suppress rattling due to decreased fastening force, so that the resultant deterioration in the performance of vibratory linear actuator 5 can also be suppressed.

Furthermore, in the present exemplary embodiment, fastening portion 63 has an elongated shape in a direction (that is, the X direction) intersecting with the direction in which legs 631 protrude (that is, in the Z direction), and the direction in which protrusions 632 protrude (that is, the Y direction).

In this manner, the fastening strength between fastening portion counterpart 431 and fastening portion 63 can be further improved, and the deterioration in the performance of vibratory linear actuator 5 can be suppressed more reliably.

Furthermore, in the present exemplary embodiment, the direction in which legs 631 face each other is set to the Y direction (that is, the width direction or the first direction).

Thus, when magnetic block 7 (that is, an example of the movable element) is reciprocated, swinging of electromagnetic core block 6 (that is, an example of the stator) in the Y direction (that is, the width direction or the first direction) can be suppressed more reliably, so that the efficiency of the reciprocation of magnetic block 7 (that is, an example of the mover) in the Y direction (that is, the width direction or the first direction) can be improved.

Furthermore, in the present exemplary embodiment, fastening portion 63 is provided at a position offset from the main magnetic path of the magnetic flux formed when electromagnet unit 61 is driven, that is, at a part where fastening portion 63 gives little effect to the efficiency of the magnetic flux formation by electromagnet unit 61. In this manner, it is possible to prevent a deterioration in the performance of vibratory linear actuator 5, resultant of providing fastening portion 63, more reliably.

In the present exemplary embodiment, fastening portion 63 and core 611 in electromagnet unit 61 are formed integrally. That is, fastening portion 63 and core 611 are an integrally formed particle that is integrally formed with electromagnetic steel plates.

In this manner, fastening portion 63 can be provided to electromagnet unit 61 more easily, and the strength of fastening portion 63 can be further enhanced.

As in the present exemplary embodiment, by providing fastening portion 63 with a shape of a hook protruding inwards, even when coupling spring 734 is disposed at a position outside but near fastening portion 63 in the Y direction, it is possible to reduce the risk of fastening portion 63 and coupling spring 734 interfering with each other. Therefore, a configuration with fastening portion 63 interposed between the pair of coupling springs 734 is made possible, and the size of electromagnetic core block 6 in the Z direction can also be reduced.

### [Operation and effect]

Hereinafter, characterizing configurations of the vibratory linear actuator and the cutter described in the exemplary embodiment, and advantageous effects achieved thereby will be described.

(Technology 1) Vibratory linear actuator 5 described in the exemplary embodiment includes output movable body 71 capable of being reciprocated in the Y direction (that is, the width direction or the first direction) by a magnetic field that changes cyclically.

Vibratory linear actuator 5 also includes vibration-absorbing movable body 72 configured to be reciprocated in the Y direction (that is, the width direction or the first direction) at a phase opposite to a phase of reciprocation of output movable body 71, so as to absorb vibration generated by the reciprocation of output movable body 71 in the Y direction (that is, the width direction or the first direction).

Further, vibratory linear actuator 5 includes coupling member 73 configured to couple output movable body 71 and vibration-absorbing movable body 72 to each other.

Output movable body 71 includes output shaft 713 which extends in the Z direction (that is, the vertical direction or the second direction) intersecting with the Y direction (that is, the width direction or the first direction) and is capable of being connected to movable blade block 32 (that is, an example of the attachment).

Vibration-absorbing movable body 72 further includes absorbing-side weight 723 configured to adjust to move the position of the center of gravity G2 of vibration-absorbing movable body 72 closer to the position of the center of gravity G1 of output movable body 71.

Coupling member 73 further includes: output movable body holder 731 configured to hold output movable body 71; vibration-absorbing movable body holder 732 configured to hold vibration-absorbing movable body 72; and coupler 733 configured to couple output movable body holder 731 and vibration-absorbing movable body holder 732 to each other.

Absorbing-side weight 723 is provided with a fastening portion (more specifically, fastening holes 72341 and fastening protrusions 72342) to be fastened with a fastening portion counterpart (more specifically, fastening holes 73231 and fastening recesses 73232) formed in vibration-absorbing movable body holder 732.

As described above, by fastening the fastening portion (more specifically, fastening holes 72341 and fastening protrusions 72342) provided to absorbing-side weight 723 to the fastening portion counterpart (more specifically, fastening holes 73231 and fastening recesses 73232) provided to vibration-absorbing movable body holder 732, and thereby fastening absorbing-side weight 723 to vibration-absorbing movable body holder 732, it is possible to provide absorbing-side weight 723 while making more effectively use of the space around vibration-absorbing movable body holder 732. Therefore, it is possible to improve the degree of freedom in shape and in the arrangement of absorbing-side weight 723.

As a result, it becomes possible to dispose absorbing-side weight 723 within the space around vibration-absorbing movable body holder 732 more efficiently, and to reduce the space occupied by absorbing-side weight 723 when the position of the center of gravity G2 of vibration-absorbing movable body 72 is matched with the position of the center of gravity G1 of output movable body 71. In other words, it is possible to absorb the vibration generated by the reciprocation of output movable body 71 in the Y direction (that is, the width direction or the first direction) more reliably with reduction in the space occupied by absorbing-side weight 723.

As described above, with vibratory linear actuator 5 described in the exemplary embodiment, it is possible to absorb the vibration generated by the reciprocation of output movable body 71 in the Y direction (that is, the width direction or the first direction) with a size reduction.

In addition, in vibratory linear actuator 5 described in the exemplary embodiment, absorbing-side weight 723 can be fastened to vibration-absorbing movable body holder 732 more firmly, and thus, it becomes possible to suppress the displacement of the position where absorbing-side weight 723 is fixed, more reliably. That is, it becomes possible to prevent the position of the center of gravity G2 of vibration-absorbing movable body 72 from becoming farther away from the position of the center of gravity G1 of output movable body 71 than that of the initial position. As a result, it is possible to suppress an increase in vibration caused by the displacement of position where absorbing-side weight 723 is fastened, so that it becomes possible to absorb vibration generated when output movable body 71 reciprocates in the Y direction (that is, the width direction or the first direction) more reliably.

(Technology 2) Furthermore, in the above (Technology 1), vibration-absorbing movable body holder 732 may include first vibration-absorbing movable body holder 7321 positioned on one side (that is, the front side) of output movable body holder 731 in the X direction (that is, the depth direction or the third direction) intersecting with the Y direction (that is, the width direction or the first direction) and the Z direction (that is, the vertical direction or the second direction), and second vibration-absorbing movable body holder 7322 positioned on the other side (that is, the rear side) of output movable body holder 731 in the X direction (that is, the depth direction or the third direction). Absorbing-side weight 723 may include first fastening base portion 7231 fastened to first vibration-absorbing movable body holder 7321, second fastening base portion 7232 fastened to second vibration-absorbing movable body holder 7322, and connecting base portion 7233 connecting first fastening base portion 7231 to second fastening base portion 7232.

In this manner, by disposing absorbing-side weight 723 on each side of output movable body holder 731 in the X direction (that is, the depth direction or the third direction), absorbing-side weight 723 can be arranged in a balanced manner, so that the position of the center of gravity G2 of vibration-absorbing movable body 72 can be matched with the position of the center of gravity G1 of output movable body 71, while making effective use of the spaces on both sides of output movable body holder 731 in the X direction (that is, the depth direction or the third direction). In other words, it is possible to match the position of the center of gravity G2 of vibration-absorbing movable body 72 with the position of the center of gravity G1 of output movable body 71, while keeping the structure of absorbing-side weight 723 simple.

Note that, by using the configuration according to (Technology 4), in a configuration in which only output movable body 71, out of output movable body 71 and vibration-absorbing movable body 72, is provided with output shaft 713 that is connectable to movable blade block 32 (that is, an example of the attachment), output shaft 713 is brought to a position near the center of magnetic block 7 (that is, an example of the movable element, more specifically, output movable body 71 and vibration-absorbing movable body 72). Therefore, the entire magnetic block 7 can be better balanced.

(Technology 3) In (Technology 1) or (Technology 2) described above, absorbing-side weight 723 may be a molded article.

As described above, by using a molded article formed with a mold such as a metal mold, a sand mold, or a plaster mold as absorbing-side weight 723, it is possible to give a more complex shape to absorbing-side weight 723. As described above, by facilitating the use of a more complex shape for absorbing-side weight 723, absorbing-side weight 723 can be formed to have a shape adapted to the available space. In this manner, it becomes possible to make efficient use of the limited space.

(Technology 4) Furthermore, in any one of (Technology 1) to (Technology 3) described above, the specific gravity of absorbing-side weight 723 may be 2.0 or more and 14.0 or less.

As described above, by setting the specific gravity of absorbing-side weight 723 to be 2.0 or more, it becomes possible to use absorbing-side weight 723 having a specific gravity greater than that of 1.5, which is the specific gravity of a general resin. Therefore, when the position of the center of gravity G2 of vibration-absorbing movable body 72 is matched with the position of the center of gravity G1 of output movable body 71, the space occupied by absorbing-side weight 723 can be made smaller than the space occupied when a resin molded article is used. In addition, by setting the specific gravity of absorbing-side weight 723 to be 14.0 or less, for example, it becomes possible to use a material such as a zinc alloy that is suitable for the mass production, as the material of absorbing-side weight 723. By making the mass production of absorbing-side weight 723 possible, the absorbing-side weight can be manufactured at a lower cost.

In the manner described above, by setting the specific gravity of absorbing-side weight 723 to be 2.0 or more and 14.0 or less, it is possible to obtain absorbing-side weight 723 capable of reducing the volume required in matching the position of the center of gravity G2 of vibration-absorbing movable body 72 with the position of the center of gravity G1 of output movable body 71, at a lower cost.

(Technology 5) Furthermore, in any one of (Technology 1) to (Technology 4) described above, the mass of vibration-absorbing movable body 72 may be made larger than the mass of output movable body 71.

In this manner, the mass of vibration-absorbing movable body 72 can be set to be equal to or greater than the total mass of movable blade block 32 (that is, an example of the attachment) and output movable body 71.

Here, output movable body 71 and vibration-absorbing movable body 72, being coupled with each other by coupling member 73, are configured to reciprocate at opposite phases with respect to each other. In such a configuration, the movable body having a smaller mass can be reciprocated more easily than the movable body having a larger mass.

Therefore, by setting the mass of vibration-absorbing movable body 72 to be equal to or greater than the total mass of movable blade block 32 (that is, an example of the attachment) and output movable body 71, it becomes possible to reciprocate output movable body 71 to which movable blade block 32 (that is, an example of the attachment) is connected, more easily than vibration-absorbing movable body 72.

(Technology 6) Further, hair clipper 1 (that is, an example of the cutter) described in the exemplary embodiment described above includes: vibratory linear actuator 5 described in any one of (Technology 1) to (Technology 5) described above; movable blades 3222 forming a part of movable blade block 32 (that is, an example of the attachment); and fixed blades 3122 with which movable blades 3222 come into sliding contact.

As described above, hair clipper 1 (that is, an example of the cutter) using vibratory linear actuator 5 described in the exemplary embodiment can reduce the vibration transmitted to a hand more reliably during the use with a size reduction.

### [Others]

Although the vibratory linear actuator and the cutter according to the present disclosure have been described in detail above, these descriptions are not intended to limit the scope of the present disclosure, and it is clear to those skilled in the art that various modifications and improvements thereof are still possible.

For example, the present disclosure can be applied to exemplary embodiments in which changes, replacements, additions, omissions, and the like of the configurations described in the exemplary embodiments are made. Alternatively, the components described in the exemplary embodiments may be combined to make an additional exemplary embodiment.

In the exemplary embodiment, a hair clipper for cutting hair is used as an example of a cutter. However, the present disclosure is also applicable to a cutter for depilation such as an electric razor, and a cutter, such as a trimmer, for cutting grass or branches of trees.

Further, in the exemplary embodiment, the shape of fastening portion 63 enabled to be fastened to fastening portion counterpart 431 provided to another component 43 has a shape of a hook protruding inwards, but the shape of fastening portion 63 may have a shape of a hook protruding inwards.

In the exemplary embodiment, fastening protrusions 72342 as the fastening portions are inserted into respective fastening recesses 73232 as the fastening portion counterparts provided to vibration-absorbing movable body holder 732 without any other member interposed therebetween. However, fastening protrusions 72342 may be inserted into respective fastening recesses 73232 with another member, such as a resin part, interposed therebetween.

The specifications (for example, shape, size, layout, and the like) of the electromagnetic core block, the magnetic block, and other details can also be changed as appropriate.

### INDUSTRIAL APPLICABILITY

As described above, because the vibratory linear actuator and the cutter according to the present disclosure can absorb vibration with a size reduction, the vibratory linear actuator and the cutter can be applied not only to hair but also to applications such as treatment of various body hairs such as humans and animals, and mowing or pruning.

### EXPLANATION OF REFERENCES

1: hair clipper
10: fastening structure
2: body
2a: grip
3: blade block
31: fixed blade block
311: fixed base
312: fixed plate
3121: body
3122: fixed blade
32: movable blade block
321: guide plate
3211: mating recess
322: movable plate
3221: body
3222: movable blade
33: push-up spring
331: coil
332: arm
4: housing
41: first housing part
411: operation switch
42: second housing part
421: hook
422: rib
43: component
431: fastening portion counterpart
4311: fastening portion counterpart body
43111: coil insertion hole
4312: flange
5: vibratory linear actuator
6: electromagnetic core block
61: electromagnet unit
611: core
6111: base portion
6111a: bottom surface
6112: central pillar
6112a: end face
6113: outer pillar
6113a: end face
6113b: through-hole
612: coil bobbin
6121: rectangular tubular portion
61211: through-hole
6122: flange
6123: extended portion
61231: coil holder groove
613: coil
62: holder
621: fastening rod
6211: end
63: fastening portion
631: leg
632: protrusion
633: fitting space
7: magnetic block
71: output movable body
711: output-side permanent magnet
712: output-side back yoke
7121: shaft-receptacle recess
7122: fastening hole
7123: slit
713: output shaft
7131: end
714: output shaft holder
7141: holder body
71411: holding hole
7142: fastening portion
71421: fastening hole
7143: link mechanism holder
71431: long hole
715: output-side weight
7151: output shaft insertion hole
7152: fastening hole
7153: positioning hole
7154: mass fine adjustment portion
716: rivet
72: vibration-absorbing movable body
721: absorbing-side permanent magnet
7211: first absorbing-side permanent magnet
7212: second absorbing-side permanent magnet
722: absorbing-side back yoke
7221: first absorbing-side back yoke
7222: second absorbing-side back yoke
7223: body
72231: fastening hole
7224: insert wall
72241: slit
723: absorbing-side weight
7231: first fastening base portion
7232: second fastening base portion
7233: connecting base portion
7234: fastening portion
72341: fastening hole
72342: fastening protrusion
7235: protrusion
7236: step portion
7237: recess groove
7238: curved portion
7238a: curved surface
7239: inclined portion
7239a: inclined surface
724: link mechanism holder member
7241: fastening portion
72411: fastening hole
7242: link mechanism holder
72421: long hole
725: rivet
73: coupling member
731: output movable body holder
7311: first output movable body holder
7312: second output movable body holder
7313: fastening hole
7314: positioning protrusion
732: vibration-absorbing movable body holder
7321: first vibration-absorbing movable body holder
7322: second vibration-absorbing movable body holder
7323: body
73231: fastening hole
73232: fastening recess
7324: step portion
7325: holding wall
7326: insertion groove
73261: mating pillar
733: coupler
7331: base portion
7332: leaf spring
73321: output-side leaf spring
73322: absorbing-side leaf spring
7333: connector
73331: output-side connector
73332: absorbing-side connector
734: coupling spring
735: fastening piece
7351: screw hole
7352: positioning protrusion
74: link mechanism
741: link body
7411: central through-hole
7412: outer through-hole
742: central shaft
743: swing shaft
8: positioning member
81: fastening portion
811: screw hole
812: positioning hole
813: shaft hole
82: positioning piece
821: cutout
83: connecting portion
84: opening
G1: center of gravity of output movable body 71
G2: center of gravity of vibration-absorbing movable body 72

## Claims

1. A vibratory linear actuator comprising:
an output movable body configured to be reciprocated in a first direction by a magnetic field that changes cyclically;
a vibration-absorbing movable body configured to absorb vibration generated by the reciprocation of the output movable body in the first direction, by being reciprocated in the first direction at a phase opposite to a phase of the reciprocation of the output movable body; and
a coupling member configured to couple the output movable body and the vibration-absorbing movable body to each other,
wherein
the output movable body comprises an output shaft which extends in a second direction intersecting with the first direction and is configured to be joined to an attachment,
the vibration-absorbing movable body comprises an absorbing-side weight for adjusting to move a position of a center of gravity of the vibration-absorbing movable body closer to a position of a center of gravity of the output movable body,
the coupling member comprises:
an output movable body holder that holds the output movable body,
a vibration-absorbing movable body holder that holds the vibration-absorbing movable body, and
a coupler that couples the output movable body holder and the vibration-absorbing movable body holder to each other, and
the absorbing-side weight has a fastening portion that is to be fastened with a fastening portion counterpart formed in the vibration-absorbing movable body holder.

2. The vibratory linear actuator according to Claim 1, wherein
the vibration-absorbing movable body holder comprises:
a first vibration-absorbing movable body holder positioned on one side of the output movable body holder in a third direction intersecting with the first direction and the second direction, and
a second vibration-absorbing movable body holder positioned on another side of the output movable body holder in the third direction,
the absorbing-side weight comprises:
a first fastening base portion fastened to the first vibration-absorbing movable body holder,
a second fastening base portion fastened to the second vibration-absorbing movable body holder, and
a connecting base portion that couples the first fastening base portion to the second fastening base portion.

3. The vibratory linear actuator according to Claim 1 or 2, wherein
the absorbing-side weight is a molded article.

4. The vibratory linear actuator according to Claim 1 or 2, wherein
a specific gravity of the absorbing-side weight is 2.0 or more and 14.0 or less.

5. The vibratory linear actuator according to Claim 1 or 2, wherein
a mass of the vibration-absorbing movable body is greater than a mass of the output movable body.

6. A cutter comprising:
the vibratory linear actuator according to Claim 1 or 2;
a movable blade that forms a part of the attachment; and
a fixed blade with which the movable blade comes into sliding contact.
